# EUROPEAN PATENT SPECIFICATION

(11) **EP 4 305 106 B1**
(45) Date of publication and mention of the grant of the patent: **15.07.2026**
(21) Application number: 22713039.0
(22) Date of filing: 09.03.2022
(51) Int. Cl.: C08G 77/448, C08K 3/20, C08K 5/53, C08K 5/5317, C08K 3/26, C08K 5/00, C08K 5/49, C08K 7/14, C08L 69/00, C08L 83/10

(54) **POLYCARBONATE COPOLYMER COMPOSITIONS FOR RAIL INTERIORS**
POLYCARBONATCOPOLYMERZUSAMMENSETZUNGEN FÜR SCHIENENFAHRZEUGINNENRÄUME
COMPOSITIONS DE COPOLYMÈRE DE POLYCARBONATE POUR INTÉRIEURS DE RAIL

(30) Priority: 12.03.2021 EP 21162286
(43) Date of publication of application: 17.01.2024
(73) Proprietor: SHPP Global Technologies B.V., 4612 PX Bergen op Zoom (NL)
(72) Inventor: DI LENA, Fabio, 4612 PX Bergen op Zoom (NL); VAN DER MEE, Mark Adrianus Johannes, 4612 PX Bergen op Zoom (NL); ASSINK, Roland Sebastian, 4612 PX Bergen op Zoom (NL)
(74) Representative: Balder IP Law, S.L.
(86) International application number: PCT/IB2022/052104
(87) International publication number: WO 2022/190000

(56) References cited:
- EP-A1- 2 977 409
- WO-A1-2015/107469
- JP-B2- 6 017 900
- US-A1- 2011 028 615

## Description

### BACKGROUND

This disclosure is directed to compositions for components for the interior of trains, and in particular seat components and claddings having low smoke density and low heat release.

The harmonized fire standard for rail applications, namely EN-45545, imposes stringent requirements on heat release, smoke density, and toxicity and flame spread properties allowed for materials used in rail applications in the European Union.

As set-forth in the requirements of EN-45545, "Hazard Levels" (HL1 to HL3) have been designated, reflecting the degree of probability of personal injury as the result of a fire. The levels are based on dwell time and are related to operation and design categories. HL1 is the lowest hazard level and is typically applicable to vehicles that run under relatively safe conditions (easy evacuation of the vehicle). HL3 is the highest hazard level and represents most dangerous operation/design categories (difficult and/or time-consuming evacuation of the vehicle, e.g. in underground rail cars).

EN-45545 classifies products are classified into 26 requirements sets (R1-R26). R1 includes horizontal and vertical interior surfaces and R6 includes passenger seat shell and coverings. For each product type, different test requirements for the hazard levels are defined.

The testing methods, and smoke density and maximum heat release rate values for the various hazard levels in the European Railway standard EN-45545 (2013) are shown in Table 1A for R6 applications.

**Table 1A.**

| European Railways Standard EN 45545 for R6 applications | | |
|---|---|---|
| Hazard Level | Smoke Density, DS-4 | Heat release, MAHRE (kW/m²) |
| | ISO 5659-2 at 50 kW/m² | ISO 5660-1 at 50 kW/m² |
| HL1 | ≤ 600 | - |
| HL2 | ≤ 300 | ≤ 90 |
| HL3 | ≤ 150 | ≤ 60 |

The testing methods, and smoke density, maximum heat release rate values and critical heat flux at extinguishment for the various hazard levels in the European Railway standard EN-45545 (2013) are shown in Table 1B for R1 applications.

**Table 1B.**

| European Railways Standard EN 45545 for R1 applications | | | |
|---|---|---|---|
| Hazard Level | Smoke Density, DS-4 ISO 5659-2 at 50 kW/m² | Heat release, MAHRE (kW/m²) ISO 5660-1 at 50 kW/m² | Critical heat flux at extinguishment (CFE) [kW/m²] ISO 5658-2 |
| HL1 | ≤ 600 | - | > 20 |
| HL2 | ≤ 300 | ≤ 90 | > 20 |
| HL3 | ≤ 150 | ≤ 60 | > 20 |

Polycarbonates are useful in the manufacture of articles and components for a wide range of applications, from automotive parts to electronic appliances. Because of their broad use, particularly in rail interiors, it is desirable to provide polycarbonate compositions with properties that meet or exceed the requirements set-forth under EN-45545.

However, it is particularly challenging to manufacture articles that meet these standards and that have good mechanical properties, including high stiffness, high strength, good impact, and good processability. For example, US2011/028615A1 refers to flame retardant compositions for use in making thin-walled parts, the compositions comprising a particular flow promoter to reduce flammability. EP2977409A1 refers to a resin composition having a balance of weld strength, flame retardancy and stiffness, containing an adhesion improving agent within a polycarbonate resin and glass fibers having a flat cross section. JP 6 017900B2 refers to compositions having a combination of rigidity, flame retardance, and decorative appearance, containing particular glass fibers with a flat cross-section. WO2015/107469A1 discloses compositions including a polycarbonate and a poly(carbonate siloxane), including glass fibers. Nevertheless, there remains a need for polycarbonate compositions that have a combination of low smoke, low heat release, low toxicity, and low flame spread properties. It would be a further advantage if the polycarbonate compositions could be made at a low material cost, with manufacturing ease, and with desirable mechanical properties.

### SUMMARY

The above-described and other deficiencies of the art are met by a polycarbonate composition comprising: a polycarbonate comprising a homopolycarbonate or a combination of a homopolycarbonate and a brominated polycarbonate; a poly(carbonate-siloxane) having a siloxane content from 30-70 wt%, based on the total weight of the poly(carbonate-siloxane) present in an amount effective to provide 1-10 wt% total siloxane, based on the total weight of the composition; 11-25 wt% of a reinforcing composition comprising 10-24 wt% glass fibers, and 1-10 wt% mineral filler comprising talc, kaolin, calcium carbonate, wollastonite, or a combination thereof; optionally, an organophosphorous flame retardant in amount effective to provide up to 1.5 wt% phosphorous; optionally, up to 10 wt% additive composition, wherein each amount is based on the total weight of the polycarbonate composition, which sums to 100 wt%.

The above-described and other deficiencies of the art are met by a polycarbonate composition comprising: a poly(aliphatic ester-carbonate), a poly(ester-carbonate-siloxane), a brominated polycarbonate, a poly(ester-carbonate), a poly(phthalate-carbonate); or a combination thereof, and optionally, a homopolycarbonate; a poly(carbonate-siloxane) present in an amount effective to provide 1-10 wt% total siloxane, based on the total weight of the composition; 11-25 wt% of a reinforcing composition comprising 10-24 wt% glass fibers, and 1-10 wt% mineral filler comprising talc, kaolin, calcium carbonate, wollastonite, or a combination thereof; optionally, an organophosphorous flame retardant in amount effective to provide up to 1.5 wt% phosphorous; optionally, up to 10 wt% additive composition, wherein each amount is based on the total weight of the polycarbonate composition, which sums to 100 wt%.

In another aspect, a method of manufacture comprises combining the above-described components to form a polycarbonate composition.

In yet another aspect, an article comprises the above-described polycarbonate composition.

In still another aspect, a method of manufacture of an article comprises molding, extruding, or shaping the above-described polycarbonate composition into an article.

The above described and other features are exemplified by the following detailed description, examples, and claims.

### DETAILED DESCRIPTION

The inventors hereof have discovered polycarbonate compositions useful for rail interiors that have low smoke density characteristics (e.g., a DS-4 measured according to ISO5659-2), low heat release characteristics, (e.g., MAHRE measured according to ISO5660-1), and optionally an improved critical heat flux at extinguishment (CFE) (e.g., measured according to ISO 5658-2).

It is exceptionally challenging to manufacture interior railway materials that meet stringent smoke density standards, heat release standards and/or flame spread standards in addition to other material requirements while also providing a low material cost, manufacturing ease, and good mechanical properties. Advantageously, the inventors have discovered that compositions including a poly(carbonate-siloxane), a certain polycarbonate different from the poly(carbonate-siloxane), and a reinforcing composition including a mineral filler and glass fibers provide the desired smoke density and heat release characteristics while also providing good stiffness and impact. This was a surprising and unexpected discovery because the development of materials which robustly meet EN45545 requirements for R1 or R6, when using moderate loadings of either only glass fiber or only mineral filler has proven challenging in the past. High loadings of inorganic fillers like glass or minerals typically will result in improved fire properties, but at the expense of impact properties, processability and color capability. However, the inventors discovered that the combination of the glass fibers and a mineral filler resulted in robust smoke density and heat release meeting R6-HL2 requirements at relatively low loading, allowing good retention of impact properties and aesthetics.

In a particularly advantageous feature, the polycarbonate compositions may have low smoke density with DS-4 values 300 or less measured according to ISO 5659- 2 on a 3 mm thick plaque at 50 kW/m², a low maximum average heat release (MAHRE) of 90 or less kJ/m² measured according to ISO 5660-1 on a 3 mm thick plaque at 50 kW/m², having high stiffness, high strength and retaining sufficient practical impact resistance characteristics. Optionally, the compositions may have a critical heat flux at extinguishment (CFE) of 20 kW/m² or more measured according to ISO 5658-2 on a 3 mm thick part.

The polycarbonate compositions include a certain polycarbonate comprising either (1) a homopolycarbonate or a combination of a homopolycarbonate and a brominated polycarbonate, or(2) a poly(ester-carbonate-siloxane), a poly(aliphatic ester-carbonate), a poly(ester-carbonate-siloxane), a brominated polycarbonate, a poly(ester-carbonate), a poly(phthalate-carbonate); or a combination thereof and optionally, a homopolycarbonate ; a poly(carbonate-siloxane); and a reinforcing composition comprising a combination of glass fibers and a mineral filler. The individual components of the polycarbonate compositions are described in detail below.

"Polycarbonate" as used herein means a polymer having repeating structural carbonate units of formula (1) 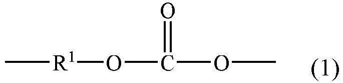 in which at least 60 percent of the total number of R¹ groups contain aromatic moieties and the balance thereof are aliphatic, alicyclic, or aromatic. In an aspect, each R¹ is a C₆₋₃₀ aromatic group, that is, contains at least one aromatic moiety. R¹ may be derived from an aromatic dihydroxy compound of the formula HO-R¹-OH, in particular of formula (2)

HO-A¹-Y¹-A²-OH (2)

wherein each of A¹ and A² is a monocyclic divalent aromatic group and Y¹ is a single bond or a bridging group having one or more atoms that separate A¹ from A². In an aspect, one atom separates A¹ from A². Preferably, each R¹ may be derived from a bisphenol of formula (3) 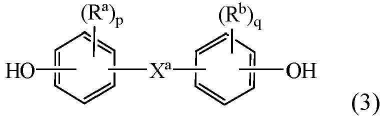 wherein R^{a} and R^{b} are each independently a halogen, C₁₋₁₂ alkoxy, or C₁₋₁₂ alkyl, and p and q are each independently integers of 0 to 4. It will be understood that when p or q is less than 4, the valence of each carbon of the ring is filled by hydrogen. Also in formula (3), X^{a} is a bridging group connecting the two hydroxy-substituted aromatic groups, where the bridging group and the hydroxy substituent of each C₆ arylene group are disposed ortho, meta, or para (preferably para) to each other on the C₆ arylene group. In an aspect, the bridging group X^{a} is single bond, - O-, -S-, -S(O)-, -S(O)₂-, -C(O)-, or a C₁₋₆₀ organic group. The organic bridging group may be cyclic or acyclic, aromatic or non-aromatic, and may further comprise heteroatoms such as halogens, oxygen, nitrogen, sulfur, silicon, or phosphorous. The ₁₋₆₀ organic group may be disposed such that the C₆ arylene groups connected thereto are each connected to a common alkylidene carbon or to different carbons of the C₁₋₆₀ organic bridging group. In an aspect, p and q is each 1, and R^{a} and R^{b} are each a C₁₋₃ alkyl group, preferably methyl, disposed meta to the hydroxy group on each arylene group.

Other useful dihydroxy compounds of the formula HO-R¹-OH include aromatic dihydroxy compounds of formula (6) 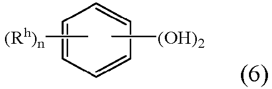 wherein each R^{h} is independently a halogen atom, C₁₋₁₀ hydrocarbyl group such as a C₁₋₁₀ alkyl, a halogen-substituted C₁₋₁₀ alkyl, a C₆₋₁₀ aryl, or a halogen-substituted C₆₋₁₀ aryl, and n is 0 to 4. The halogen is usually bromine.

Some illustrative examples of specific dihydroxy compounds include the following: 4,4'-dihydroxybiphenyl, 1,6-dihydroxynaphthalene, 2,6-dihydroxynaphthalene, bis(4-hydroxyphenyl)methane, bis(4-hydroxyphenyl)diphenylmethane, bis(4-hydroxyphenyl)-1-naphthylmethane, 1,2-bis(4-hydroxyphenyl)ethane, 1,1-bis(4-hydroxyphenyl)-1-phenylethane, 2-(4-hydroxyphenyl)-2-(3-hydroxyphenyl)propane, bis(4-hydroxyphenyl)phenylmethane, 2,2-bis(4-hydroxy-3-bromophenyl)propane, 1,1-bis (hydroxyphenyl)cyclopentane, 1,1-bis(4-hydroxyphenyl)cyclohexane, 1,1-bis(4-hydroxyphenyl)isobutene, 1,1-bis(4-hydroxyphenyl)cyclododecane, trans-2,3-bis(4-hydroxyphenyl)-2-butene, 2,2-bis(4-hydroxyphenyl)adamantane, alpha, alpha'-bis(4-hydroxyphenyl)toluene, bis(4-hydroxyphenyl)acetonitrile, 2,2-bis(3-methyl-4-hydroxyphenyl)propane, 2,2-bis(3-ethyl-4-hydroxyphenyl)propane, 2,2-bis(3-n-propyl-4-hydroxyphenyl)propane, 2,2-bis(3-isopropyl-4-hydroxyphenyl)propane, 2,2-bis(3-sec-butyl-4-hydroxyphenyl)propane, 2,2-bis(3-t-butyl-4-hydroxyphenyl)propane, 2,2-bis(3-cyclohexyl-4-hydroxyphenyl)propane, 2,2-bis(3-allyl-4-hydroxyphenyl)propane, 2,2-bis(3-methoxy-4-hydroxyphenyl)propane, 2,2-bis(4-hydroxyphenyl)hexafluoropropane, 1,1-dichloro-2,2-bis(4-hydroxyphenyl)ethylene, 1,1-dibromo-2,2-bis(4-hydroxyphenyl)ethylene, 1,1-dichloro-2,2-bis(5-phenoxy-4-hydroxyphenyl)ethylene, 4,4'-dihydroxybenzophenone, 3,3-bis(4-hydroxyphenyl)-2-butanone, 1,6-bis(4-hydroxyphenyl)-1,6-hexanedione, ethylene glycol bis(4-hydroxyphenyl)ether, bis(4-hydroxyphenyl)ether, bis(4-hydroxyphenyl)sulfide, bis(4-hydroxyphenyl)sulfoxide, bis(4-hydroxyphenyl)sulfone, 9,9-bis(4-hydroxyphenyl)fluorine, 2,7-dihydroxypyrene, 6,6'-dihydroxy-3,3,3',3'- tetramethylspiro(bis)indane ("spirobiindane bisphenol"), 3,3-bis(4-hydroxyphenyl)phthalimide, 2,6-dihydroxydibenzo-p-dioxin, 2,6-dihydroxythianthrene, 2,7-dihydroxyphenoxathin, 2,7-dihydroxy-9,10-dimethylphenazine, 3,6-dihydroxydibenzofuran, 3,6-dihydroxydibenzothiophene, and 2,7-dihydroxycarbazole, resorcinol, substituted resorcinol compounds such as 5-methyl resorcinol, 5-ethyl resorcinol, 5-propyl resorcinol, 5-butyl resorcinol, 5-t-butyl resorcinol, 5-phenyl resorcinol, 5-cumyl resorcinol, 2,4,5,6-tetrafluoro resorcinol, 2,4,5,6-tetrabromo resorcinol, or the like; catechol; hydroquinone; substituted hydroquinones such as 2-methyl hydroquinone, 2-ethyl hydroquinone, 2-propyl hydroquinone, 2-butyl hydroquinone, 2-t-butyl hydroquinone, 2-phenyl hydroquinone, 2-cumyl hydroquinone, 2,3,5,6-tetramethyl hydroquinone, 2,3,5,6-tetra-t-butyl hydroquinone, 2,3,5,6-tetrafluoro hydroquinone, 2,3,5,6-tetrabromo hydroquinone, or the like, or a combination thereof.

The polycarbonates may have an intrinsic viscosity, as determined in chloroform at 25°C, of 0.3 to 1.5 deciliters per gram (dl/gm), preferably 0.45 to 1.0 dl/gm. The polycarbonates may have a weight average molecular weight (Mw) of 10,000 to 200,000 Daltons, preferably 20,000 to 100,000 Daltons, as measured by gel permeation chromatography (GPC), using a crosslinked styrene-divinylbenzene column using polystyrene standards and calculated for polycarbonate. GPC samples are prepared at a concentration of 1 mg per ml, and are eluted at a flow rate of 1.5 ml per minute.

The polycarbonate compositions may include a homopolycarbonate (wherein each R¹ in the polymer is the same). In an aspect, the homopolycarbonate in the polycarbonate composition is derived from a bisphenol of formula (2), preferably bisphenol A, in which each of A¹ and A² is p-phenylene and Y¹ is isopropylidene in formula (2).

In some aspects, the polycarbonate is a bisphenol A homopolycarbonate. The bisphenol A homopolycarbonate may have: a melt flow rate of 3-50, per 10 min at 300 °C and a 1.2 kg load and a Mw of 17,000-40,000, g/mole, preferably 20,000-30,000 g/mole, more preferably 21,000 to 23,0000, each as measured as described above. In some aspects, the polycarbonate comprises a linear bisphenol A homopolycarbonate. In some aspects, the polycarbonate comprises a linear bisphenol A polycarbonate homopolymer having a weight average molecular weight of 26,000 to 40,000 grams per mole, preferably 27,000 to 35,000 grams per mole, as determined by gel permeation chromatography using polystyrene standards and calculated for polycarbonate; or a linear bisphenol A polycarbonate homopolymer having a weight average molecular weight of 15,000 to 25,000 grams per mole, preferably 17,000 to 25,000 grams per mole, as determined by gel permeation chromatography using polystyrene standards and calculated for polycarbonate; or a combination thereof.

The homopolycarbonate may be present, for example, from 10-89 wt%, 20-75 wt%, or 30-60 wt%, each based on the total weight of the polycarbonate composition.

"Polycarbonates" include homopolycarbonates (wherein each R¹ in the polymer is the same) and copolymers comprising different R¹ moieties in the carbonate ("copolycarbonates"), and copolymers comprising carbonate units and other types of polymer units, such as ester units or siloxane units.

The certain polycarbonate of the polycarbonate compositions may include an aromatic poly(ester-carbonate). Such polycarbonates further contain, in addition to recurring carbonate units of formula (1), repeating ester units of formula (3) 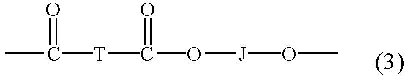 wherein J is a divalent group derived from an aromatic dihydroxy compound (including a reactive derivative thereof), such as a bisphenol of formula (2), e.g., bisphenol A; and T is a divalent group derived from an aromatic dicarboxylic acid (including a reactive derivative thereof), preferably isophthalic or terephthalic acid wherein the weight ratio of isophthalic acid to terephthalic acid is 91:9 to 2:98. Copolyesters containing a combination of different T or J groups may be used. The polyester units may be branched or linear.

In an aspect, J is derived from a bisphenol of formula (2), e.g., bisphenol A. In another aspect, J is derived from an aromatic dihydroxy compound, e.g, resorcinol. A portion of the groups J, for example up to 20 mole percent (mol%) may be a C₂₋₃₀ alkylene group having a straight chain, branched chain, or cyclic (including polycyclic) structure, for example ethylene, n-propylene, i-proplyene, 1,4-butylene, 1,4-cyclohexylene, or 1,4-methylenecyclohexane. Preferably, all J groups are aromatic.

Aromatic dicarboxylic acids that may be used to prepare the polyester units include isophthalic or terephthalic acid, 1,2-di(p-carboxyphenyl)ethane, 4,4'-dicarboxydiphenyl ether, 4,4'-bisbenzoic acid, or a combination thereof. Acids containing fused rings may also be present, such as in 1,4-, 1,5-, or 2,6-naphthalenedicarboxylic acids. Specific dicarboxylic acids include terephthalic acid, isophthalic acid, naphthalene dicarboxylic acid, or a combination thereof. A specific dicarboxylic acid comprises a combination of isophthalic acid and terephthalic acid wherein the weight ratio of isophthalic acid to terephthalic acid is 91:9 to 2:98. A portion of the groups T, for example up to 20 mol%, may be aliphatic, for example derived from 1,4-cyclohexane dicarboxylic acid. Preferably all T groups are aromatic.

The molar ratio of ester units to carbonate units in the polycarbonates may vary broadly, for example 1:99 to 99:1, preferably 10:90 to 90:10, more preferably 25:75 to 75:25, or 2:98 to 15:85, depending on the desired properties of the final composition.

The certain polycarbonate of the polycarbonate compositions may include specific poly(ester-carbonate)s are those including bisphenol A carbonate units and isophthalate/terephthalate-bisphenol A ester units, i.e., a poly(bisphenol A carbonate)-co-(bisphenol A-phthalate-ester) of formula (4a) 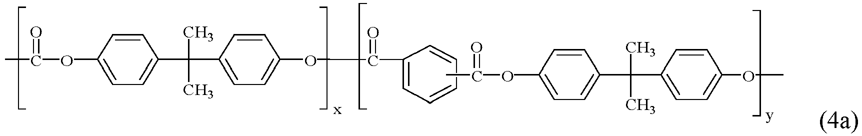 wherein x and y represent the weight percent of bisphenol A carbonate units and isophthalate/terephthalate -bisphenol A ester units, respectively. Generally, the units are present as blocks. In an aspect, the weight ratio of carbonate units x to ester units y in the polycarbonates is 1:99 to 50:50, or 5:95 to 25:75, or 10:90 to 45:55. Copolymers of formula (5) comprising 35-45 wt% of carbonate units and 55-65 wt% of ester units, wherein the ester units have a molar ratio of isophthalate to terephthalate of 45:55 to 55:45 are often referred to as poly(carbonate-ester)s. Copolymers comprising 15-25 wt% of carbonate units and 75-85 wt% of ester units, wherein the ester units have a molar ratio of isophthalate to terephthalate from 98:2 to 88:12 are often referred to as poly(phthalate-carbonate)s and may optionally be present in addition to the certain polycarbonates of the polycarbonate compositions.

In another aspect, the high heat poly(ester-carbonate) is a poly(carbonate-co-monoarylate ester) of formula (4b) that includes aromatic carbonate units (1) and repeating monoarylate ester units 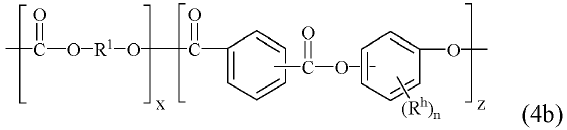 wherein R¹ is as defined in formula (1), and each R^{h} is independently a halogen atom, a C₁₋₁₀ hydrocarbyl such as a C₁₋₁₀ alkyl group, a halogen-substituted C₁₋₁₀ alkyl group, a C₆₋₁₀ aryl group, or a halogen-substituted C₆₋₁₀ aryl group, and n is 0-4. Preferably, each R^{h} is independently a C₁₋₄ alkyl, and n is 0-3, 0-1, or 0. The mole ratio of carbonate units x to ester units z may be from 99: 1 to 1:99, or from 98:2 to 2:98, or from 90: 10 to 10:90. In an aspect the mole ratio of x:z is from 50:50 to 99: 1, or from 1:99 to 50:50.

In an aspect, the high heat poly(ester-carbonate) comprises aromatic ester units and monoarylate ester units derived from the reaction of a combination of isophthalic and terephthalic diacids (or a reactive derivative thereof) with resorcinol (or a reactive derivative thereof) to provide isophthalate/terephthalate-resorcinol ("ITR" ester units). The ITR ester units may be present in the high heat poly(ester-carbonate) in an amount greater than or equal to 95 mol%, preferably greater than or equal to 99 mol%, and still more preferably greater than or equal to 99.5 mol%, based on the total moles of ester units in the polycarbonate. A preferred high heat poly(ester-carbonate) comprises bisphenol A carbonate units, and ITR ester units derived from terephthalic acid, isophthalic acid, and resorcinol, i.e., a poly(bisphenol A carbonate-co-isophthalate/terephthalate-resorcinol ester) of formula (c) 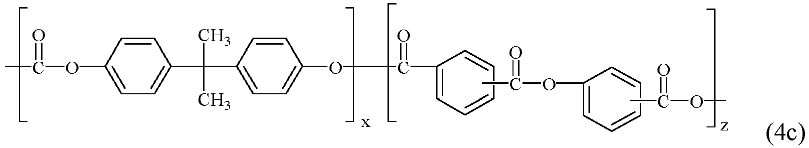 wherein the mole ratio of x:z is from 98:2 to 2:98, or from 90:10 to 10:90. In an aspect the mole ratio of x:z is from 50:50 to 99: 1, or from 1:99 to 50:50. The ITR ester units may be present in the poly(bisphenol A carbonate-co-isophthalate-terephthalate-resorcinol ester) in an amount greater than or equal to 95 mol%, preferably greater than or equal to 99 mol%, and still more preferably greater than or equal to 99.5 mol%, based on the total moles of ester units in the copolymer. Other carbonate units, other ester units, or a combination thereof may be present, in a total amount of 1 to 20 mole%, based on the total moles of units in the copolymers, for example monoaryl carbonate units of formula (5) and bisphenol ester units of formula (3a): 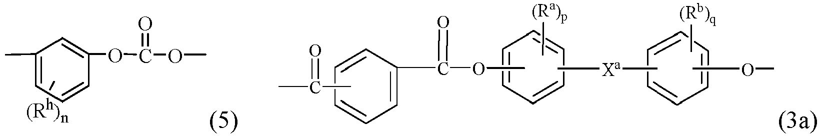 wherein, in the foregoing formulae, R^{h} is each independently a C₁₋₁₀ hydrocarbon group, n is 0-4, R^{a} and R^{b} are each independently a C₁₋₁₂ alkyl, p and q are each independently integers of 0-4, and X^{a} is a single bond, -O-, -S-, -S(O)-, -S(O)₂-, -C(O)-, or a C₁₋₁₃ alkylidene of formula - C(R^{c})(R^{d}) - wherein R^{c} and R^{d} are each independently hydrogen or C₁₋₁₂ alkyl, or a group of the formula -C(=R^{e})- wherein R^{e} is a divalent C₁₋₁₂ hydrocarbon group. The bisphenol ester units may be bisphenol A phthalate ester units of the formula (3b)

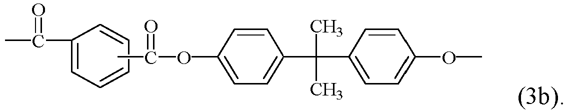

In an aspect, the poly(bisphenol A carbonate-co-isophthalate/terephthalate-resorcinol ester) (4c) comprises 1-90 mol% of bisphenol A carbonate units, 10-99 mol% of isophthalic acid-terephthalic acid-resorcinol ester units, and optionally 1-60 mol% of resorcinol carbonate units, isophthalic acid-terephthalic acid-bisphenol A phthalate ester units, or a combination thereof. In another aspect, poly(bisphenol A carbonate-co-isophthalate/terephthalate resorcinol ester) (6) comprises 10-20 mol% of bisphenol A carbonate units, 20-98 mol% of isophthalic acid-terephthalic acid-resorcinol ester units, and optionally 1-60 mol% of resorcinol carbonate units, isophthalic acid-terephthalic acid-bisphenol A phthalate ester units, or a combination thereof.

The certain polycarbonates of the polycarbonate compositions may include poly(ester-carbonate-siloxane)s comprising bisphenol A carbonate units, isophthalate-terephthalate-bisphenol A ester units, and siloxane units, for example blocks containing 5 to 200 dimethylsiloxane units.

The high heat poly(ester-carbonate)s may have an Mw of 2,000-100,000 g/mol, preferably 3,000-75,000 g/mol, more preferably 4,000-50,000 g/mol, more preferably 5,000-35,000 g/mol, and still more preferably 17,000-30,000 g/mol. Molecular weight determinations are performed using GPC using a cross linked styrene-divinyl benzene column, at a sample concentration of 1 milligram per milliliter, and as calibrated with bisphenol A homopolycarbonate standards. Samples are eluted at a flow rate of 1.0 ml/min with methylene chloride as the eluent.

The polycarbonate of the polycarbonate compositions may include a poly(aliphatic ester-carbonate) derived from a linear C₆₋₂₀ aliphatic dicarboxylic acid (which includes a reactive derivative thereof), specifically a linear C₆₋₁₂ aliphatic dicarboxylic acid(which includes a reactive derivative thereof). Specific dicarboxylic acids include n-hexanedioic acid (adipic acid), n-decanedioic acid (sebacic acid), and alpha, omega-C₁₂ dicarboxylic acids such as dodecanedioic acid (DDDA). A specific poly(aliphatic ester)-polycarbonate is of formula (8): 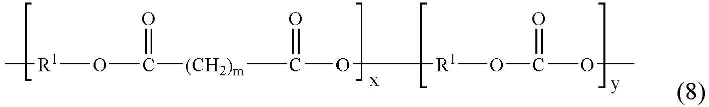 wherein each R¹ may be the same or different, and is as described in formula (1), m is 4 to 18, preferably 4 to 10, and the average molar ratio of ester units to carbonate units x:y is 99:1 to 1:99, including 13:87 to 2:98, or 9:91 to 2:98, or 8:92 to 2:98. In a specific aspect, the poly(aliphatic ester)-polycarbonate copolymer comprises bisphenol A sebacate ester units and bisphenol A carbonate units, having, for example an average molar ratio of x:y of 2:98 to 8:92, for example 6:94.

The poly(aliphatic ester-carbonate) may have a weight average molecular weight of 15,000 to 40,000 g/mol, including 20,000 to 38,000 g/mol (measured by GPC based on polystyrene standards and calculated for polycarbonate).

Polycarbonates may be manufactured by processes such as interfacial polymerization and melt polymerization, which are known, and are described, for example, in WO 2013/175448 A1 and WO 2014/072923 A1. An end-capping agent (also referred to as a chain stopper agent or chain terminating agent) may be included during polymerization to provide end groups, for example monocyclic phenols such as phenol, p-cyanophenol, and C₁₋₂₂ alkyl-substituted phenols such as p-cumyl-phenol, resorcinol monobenzoate, and p-and tertiary-butyl phenol, monoethers of diphenols, such as p-methoxyphenol, monoesters of diphenols such as resorcinol monobenzoate, functionalized chlorides of aliphatic monocarboxylic acids such as acryloyl chloride and methacryoyl chloride, and mono-chloroformates such as phenyl chloroformate, alkyl-substituted phenyl chloroformates, p-cumyl phenyl chloroformate, and toluene chloroformate. Combinations of different end groups may be used. Branched polycarbonate blocks may be prepared by adding a branching agent during polymerization, for example trimellitic acid, trimellitic anhydride, trimellitic trichloride, tris-p-hydroxyphenylethane, isatin-bis-phenol, tris-phenol TC (1,3,5-tris((p-hydroxyphenyl)isopropyl)benzene), tris-phenol PA (4(4(1,1-bis(p-hydroxyphenyl)-ethyl) alpha, alpha-dimethyl benzyl)phenol), 4-chloroformyl phthalic anhydride, trimesic acid, and benzophenone tetracarboxylic acid. The branching agents may be added at a level of 0.05 to 4.0 wt %, preferably 0.25 to 2.0 wt%. Combinations comprising linear polycarbonates and branched polycarbonates may be used.

An end-capping agent (also referred to as a chain stopper agent or chain terminating agent) may be included during polymerization to provide end groups. The end-capping agent (and thus end groups) are selected based on the desired properties of the polycarbonates. Exemplary end-capping agents are exemplified by monocyclic phenols such as phenol and C₁₋₂₂ alkyl-substituted phenols such as p-cumyl-phenol, resorcinol monobenzoate, and p-and tertiary-butyl phenol, monoethers of diphenols, such as p-methoxyphenol, and alkyl-substituted phenols with branched chain alkyl substituents having 8 to 9 carbon atoms, 4-substituted-2-hydroxybenzophenones and their derivatives, aryl salicylates, monoesters of diphenols such as resorcinol monobenzoate, 2-(2-hydroxyaryl)-benzotriazoles and their derivatives, 2-(2-hydroxyaryl)-1,3,5-triazines and their derivatives, mono-carboxylic acid chlorides such as benzoyl chloride, C₁₋₂₂ alkyl-substituted benzoyl chloride, toluoyl chloride, bromobenzoyl chloride, cinnamoyl chloride, and 4-nadimidobenzoyl chloride, polycyclic, mono-carboxylic acid chlorides such as trimellitic anhydride chloride, and naphthoyl chloride, functionalized chlorides of aliphatic monocarboxylic acids, such as acryloyl chloride and methacryoyl chloride, and mono-chloroformates such as phenyl chloroformate, alkyl-substituted phenyl chloroformates, p-cumyl phenyl chloroformate, and toluene chloroformate. Combinations of different end groups may be used.

The polycarbonate composition comprises a poly(carbonate-siloxane), also referred to in the art as a polycarbonate-polysiloxane copolymer. The polysiloxane blocks comprise repeating diorganosiloxane units as in formula (10) 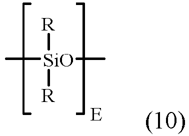 wherein each R is independently a C₁₋₁₃ monovalent organic group. For example, R may be a C₁₋₁₃ alkyl, C₁₋₁₃ alkoxy, C₂₋₁₃ alkenyl, C₂₋₁₃ alkenyloxy, C₃₋₆ cycloalkyl, C₃₋₆ cycloalkoxy, C₆₋₁₄ aryl, C₆₋₁₀ aryloxy, C₇₋₁₃ arylalkylene, C₇₋₁₃ arylalkylenoxy, C₇₋₁₃ alkylarylene, or C₇₋₁₃ alkylaryleneoxy. The foregoing groups may be fully or partially halogenated with fluorine, chlorine, bromine, or iodine, or a combination thereof. In an aspect, where a transparent poly(carbonate-siloxane) is desired, R is unsubstituted by halogen. Combinations of the foregoing R groups may be used in the same copolymer.

The value of E in formula (10) may vary widely depending on the type and relative amount of each component in the polycarbonate composition, the desired properties of the composition, and like considerations. Generally, E has an average value of 2 to 1,000, preferably 2 to 500, 2 to 200, or 2 to 125, 5 to 80, or 10 to 70. **In** an aspect, E has an average value of 10 to 80 or 10 to 40, and in still another aspect, E has an average value of 40 to 80, or 40 to 70. Where E is of a lower value, e.g., less than 40, it may be desirable to use a relatively larger amount of the poly(carbonate-siloxane) copolymer. Conversely, where E is of a higher value, e.g., greater than 40, a relatively lower amount of the poly(carbonate-siloxane) copolymer may be used. A combination of a first and a second (or more) poly(carbonate-siloxane) copolymers may be used, wherein the average value of E of the first copolymer is less than the average value of E of the second copolymer.

**In** an aspect, the polysiloxane blocks are of formula (11) 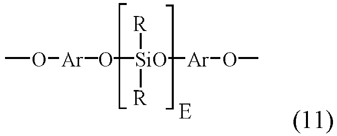 wherein E and R are as defined if formula (10); each R may be the same or different, and is as defined above; and Ar may be the same or different, and is a substituted or unsubstituted C₆₋₃₀ arylene, wherein the bonds are directly connected to an aromatic moiety. Ar groups in formula (11) may be derived from a C₆₋₃₀ dihydroxyarylene compound, for example a dihydroxyarylene compound of formula (3) or (6). Dihydroxyarylene compounds are 1,1-bis(4-hydroxyphenyl) methane, 1,1-bis(4-hydroxyphenyl) ethane, 2,2-bis(4-hydroxyphenyl) propane, 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-1-methylphenyl) propane, 1,1-bis(4-hydroxyphenyl) cyclohexane, bis(4-hydroxyphenyl sulfide), and 1,1-bis(4-hydroxy-t-butylphenyl) propane.

In another aspect, polysiloxane blocks are of formula (13) 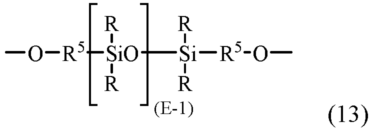 wherein R and E are as described above, and each R⁵ is independently a divalent C₁₋₃₀ organic group, and wherein the polymerized polysiloxane unit is the reaction residue of its corresponding dihydroxy compound. In a specific aspect, the polysiloxane blocks are of formula (14): 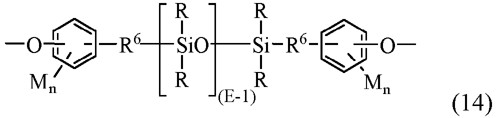 wherein R and E are as defined above. R⁶ in formula (14) is a divalent C₂₋₈ aliphatic group. Each M in formula (14) may be the same or different, and may be a halogen, cyano, nitro, C₁₋₈ alkylthio, C₁₋₈ alkyl, C₁₋₈ alkoxy, C₂₋₈ alkenyl, C₂₋₈ alkenyloxy, C₃₋₈ cycloalkyl, C₃₋₈ cycloalkoxy, C₆₋₁₀ aryl, C₆₋₁₀ aryloxy, C₇₋₁₂ aralkyl, C₇₋₁₂ aralkoxy, C₇₋₁₂ alkylaryl, or C₇₋₁₂ alkylaryloxy, wherein each n is independently 0, 1, 2, 3, or 4.

In an aspect, M is bromo or chloro, an alkyl such as methyl, ethyl, or propyl, an alkoxy such as methoxy, ethoxy, or propoxy, or an aryl such as phenyl, chlorophenyl, or tolyl; R⁶ is a dimethylene, trimethylene or tetramethylene; and R is a C₁₋₈ alkyl, haloalkyl such as trifluoropropyl, cyanoalkyl, or aryl such as phenyl, chlorophenyl or tolyl. In another aspect, R is methyl, or a combination of methyl and trifluoropropyl, or a combination of methyl and phenyl. In still another aspect, R is methyl, M is methoxy, n is one, and R⁶ is a divalent C₁₋₃ aliphatic group. Specific polysiloxane blocks are of the formula 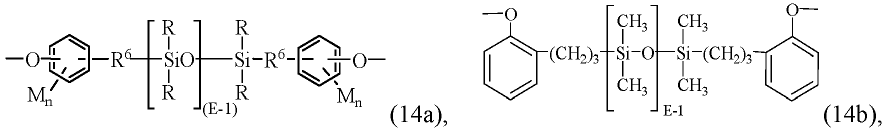 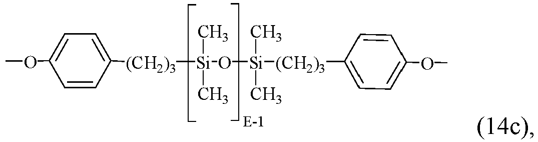 or a combination thereof, wherein E has an average value of 2 to 200, 2 to 125, 5 to 125, 5 to 100, 5 to 50, 20 to 80, or 5 to 20.

Blocks of formula (14) may be derived from the corresponding dihydroxy polysiloxane, which in turn may be prepared effecting a platinum-catalyzed addition between the siloxane hydride and an aliphatically unsaturated monohydric phenol such as eugenol, 2-alkylphenol, 4-allyl-2-methylphenol, 4-allyl-2-phenylphenol, 4-allyl-2-bromophenol, 4-allyl-2-t-butoxyphenol, 4-phenyl-2-phenylphenol, 2-methyl-4-propylphenol, 2-allyl-4,6-dimethylphenol, 2-allyl-4-bromo-6-methylphenol, 2-allyl-6-methoxy-4-methylphenol and 2-allyl-4,6-dimethylphenol. The poly(carbonate-siloxane) copolymers may then be manufactured, for example, by the synthetic procedure of European Patent Application Publication No. 0 524 731 A1 of Hoover, page 5, Preparation 2.

The poly(carbonate-siloxane) copolymers may comprise 50 to 99 weight percent of carbonate units and 1 to 50 weight percent siloxane units. Within this range, the poly(carbonate-siloxane) copolymer may comprise 70 to 98 weight percent, more preferably 75 to 97 weight percent of carbonate units and 2 to 45 weight percent, more preferably 5 to 10 or 30 to 45 weight percent siloxane units.

In an aspect, a blend is used, in particular a blend of a bisphenol A homopolycarbonate and a poly(carbonate-siloxane) block copolymer of bisphenol A blocks and eugenol capped polydimethylsiloxane blocks, of the formula 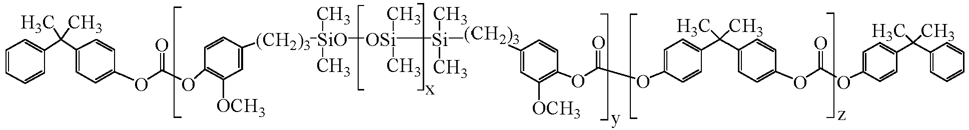 wherein x is 1 to 200, preferably 5 to 85, preferably 10 to 70, preferably 15 to 65, and more preferably 40 to 60; x is 1 to 500, or 10 to 200, and z is 1 to 1000, or 10 to 800. In an aspect, x is 1 to 200, y is 1 to 90 and z is 1 to 600, and in another aspect, x is 30 to 50, y is 10 to 30 and z is 45 to 600. The polysiloxane blocks may be randomly distributed or controlled distributed among the polycarbonate blocks.

In an aspect, the poly(carbonate-siloxane) copolymer comprises 10 wt% or less, preferably 8 wt% or less, and of the polysiloxane based on the total weight of the poly(carbonate-siloxane) copolymer. In another aspect, the poly(carbonate-siloxane) copolymer comprises 10 wt% or more, preferably 14 wt% or more, and more preferably 18 wt% or more, of the polysiloxane copolymer based on the total weight of the poly(carbonate-siloxane) copolymer.

In an aspect, the poly(carbonate-siloxane) copolymer comprises 30-70 wt%, preferably 35-65 wt%, more preferably 35-55 wt%, even more preferably 35-45 wt% of the polysiloxane based on the total weight of the poly(carbonate-siloxane) copolymer.

The poly(carbonate-siloxane) copolymer may include a single poly(carbonate siloxane). In certain aspects, the polycarbonate compositions include a poly(carbonate-siloxane) copolymer comprising 10 wt% or less siloxane content, a poly(carbonate-siloxane) copolymer comprising 30-70 wt% siloxane content, or, a poly(carbonate-siloxane) copolymer comprising greater than 10 to less than 30 wt% siloxane content. The poly(carbonate-siloxane) copolymer may include a combination of poly(carbonate-siloxane) copolymers, for example a combination of two or more of the foregoing. The polycarbonate compositions may include a poly(carbonate-siloxane) copolymer comprising 10 wt% or less siloxane content, a poly(carbonate-siloxane) copolymer comprising greater than 10 to less than 30 wt% siloxane content, a poly(carbonate-siloxane) copolymer comprising 30-70 wt% siloxane content, or a combination thereof, each based on the total weight of each poly(carbonate-siloxane) copolymer. In certain aspects, the polycarbonate compositions include a poly(carbonate-siloxane) copolymer comprising 10 wt% or less siloxane content and a poly(carbonate-siloxane) copolymer comprising 30-70 wt% siloxane content, each based on the total weight of each poly(carbonate-siloxane) copolymer.

Poly(carbonate-siloxane)s may have a weight average molecular weight of 2,000 to 100,000 g/mol, preferably 5,000 to 50,000 g/mol as measured by gel permeation chromatography using a crosslinked styrene-divinyl benzene column, at a sample concentration of 1 milligram per milliliter, using polystyrene standards and calculated for polycarbonate.

The poly(carbonate-siloxane)s may have a melt volume flow rate, measured at 300°C/1.2 kg, of 1 to 50 cubic centimeters per 10 minutes (cc/10 min), preferably 2 to 30 cc/10 min. Combinations of the poly(carbonate-siloxane)s of different flow properties may be used to achieve the overall desired flow property.

The polycarbonate compositions may include from 1 to 10 wt%, or 2-5 wt% of siloxane, each based on the total composition.

The polycarbonate compositions may be substantially free of polyetherimide, substantially free of an elastomer-modified graft copolymer, or a combination thereof. In some aspects, the polycarbonate compositions are "substantially free of a polyetherimide." As used herein, "substantially free of a polyetherimide" means 5 wt% or less, 1 wt% or less, 0.5 wt% or less, 0.1 wt% or less, 0.05 wt% or less, 0.01 wt% or less, or less than 0.01 wt%, each based on the total weight of the polycarbonate composition. In some aspects, the polycarbonate compositions are "substantially free of an elastomer-modified graft copolymer." As used herein, "substantially free of an elastomer-modified graft copolymer" means 5 wt% or less, 1 wt% or less, 0.5 wt% or less, 0.1 wt% or less, 0.05 wt% or less, 0.01 wt% or less, or less than 0.01 wt%, each based on the total weight of the polycarbonate composition.

The reinforcing composition of the polycarbonate compositions include a mineral filler comprising talc, kaolin, calcium carbonate, wollastonite, or a combination thereof, for example, calcium carbonates such as chalk, limestone, marble, synthetic precipitated calcium carbonates, or the like; talc, such as fibrous, modular, needle shaped, lamellar talc, or the like; wollastonite; surface-treated wollastonite; and kaolin, such as hard kaolin, soft kaolin, calcined kaolin, kaolin comprising various coatings known in the art to facilitate compatibility with the polymer matrix. Additional mineral fillers or reinforcing agents may also be present. Possible additional fillers or reinforcing agents include, for example, silicates and silica powders such as aluminum silicate (mullite), synthetic calcium silicate, zirconium silicate, fused silica, crystalline silica graphite, natural silica sand, or the like; boron powders such as boron-nitride powder, boron-silicate powders, or the like; oxides such as TiO₂, aluminum oxide, magnesium oxide, or the like; calcium sulfate (as its anhydride, dihydrate or trihydrate); glass spheres such as hollow and solid glass spheres, silicate spheres, cenospheres, aluminosilicate (armospheres), or the like; or the like; single crystal fibers or "whiskers" such as silicon carbide, alumina, boron carbide, iron, nickel, copper, or the like; fibers (including continuous and chopped fibers) such as asbestos, carbon fibers, sulfides such as molybdenum sulfide, zinc sulfide or the like; barium compounds such as barium titanate, barium ferrite, barium sulfate, heavy spar, or the like; metals and metal oxides such as particulate or fibrous aluminum, bronze, zinc, copper and nickel or the like; flaked fillers such as glass flakes, flaked silicon carbide, aluminum diboride, aluminum flakes, steel flakes or the like; fibrous fillers, for example short inorganic fibers such as those derived from blends comprising at least one of aluminum silicates, aluminum oxides, magnesium oxides, and calcium sulfate hemihydrate or the like; natural fillers and reinforcements, such as wood flour obtained by pulverizing wood, fibrous products such as cellulose, cotton, sisal, jute, starch, cork flour, lignin, ground nut shells, corn, rice grain husks or the like; organic fillers such as polytetrafluoroethylene; reinforcing organic fibrous fillers formed from organic polymers capable of forming fibers such as poly(ether ketone), polyimide, polybenzoxazole, poly(phenylene sulfide), polyesters, polyethylene, aromatic polyamides, aromatic polyimides, polyetherimides, polytetrafluoroethylene, acrylic polymers, poly(vinyl alcohol) or the like; as well as additional fillers and reinforcing agents such as mica, clay, feldspar, flue dust, fillite, quartz, quartzite, perlite, tripoli, diatomaceous earth, carbon black, or the like, or a combination thereof.

The fillers and reinforcing agents may be coated with a layer of metallic material to facilitate conductivity, or surface treated with silanes to improve adhesion and dispersion with the polymer matrix. In addition, the reinforcing fillers may be provided in the form of monofilament or multifilament fibers and may be used individually or in combination with other types of fiber, through, for example, co-weaving or core/sheath, side-by-side, orange-type or matrix and fibril constructions, or by other methods known to one skilled in the art of fiber manufacture. Co-woven structures include glass fiber-carbon fiber, carbon fiber-aromatic polyimide (aramid) fiber, and aromatic polyimide fiberglass fiber or the like. Fibrous fillers may be supplied in the form of, for example, rovings, woven fibrous reinforcements, such as 0-90 degree fabrics or the like; non-woven fibrous reinforcements such as continuous strand mat, chopped strand mat, tissues, papers and felts or the like; or three-dimensional reinforcements such as braids.

The reinforcing compositions of the polycarbonate compositions include glass fibers. The term "glass" refers to a material, natural or synthetic, which contains silicon dioxide (SiO₂) or silica as its main material. The glass fibers may be textile glass fibers such as E, A, C, ECR, R, S, D, and/or NE glass fibers, and are desirably E type glass fibers. The glass fibers may be provided in the form of monofilament or multifilament fibers and may be used either alone or in combination with other types of fibers, for example, co-weaving or core/sheath, side-by-side, skin-core type or matrix and fibril constructions. The glass fibers may be supplied in the form of rovings, woven fibrous reinforcements, such as 0-90 degree fabrics or the like; non-woven fibrous reinforcements such as continuous strand mat, chopped strand mat, tissues, papers and felts or the like; or three-dimensional reinforcements such as braids. The preferred filaments for plastic reinforcement are made by mechanical pulling.

The glass fiber may be a chopped glass fiber, long glass fiber, glass filament, woven glass fiber, or a combination thereof. In an aspect, the glass fiber may further be combined with carbon fiber, woven carbon fiber, ceramic fiber, or a combination thereof.

The glass fibers may be continuous or chopped, preferably chopped. Glass fibers in the form of chopped strands may have a length of 0.3 millimeters (mm) to 10 centimeters (cm), preferably 0.5 mm to 5 cm or 3 mm to 13 mm. The glass fibers may have a length from 0.2-20 mm, preferably 0.2-10 mm, more preferably 0.7-7 mm. The glass fibers may have any cross-section, such as a round (or circular), flat, bilobe, or irregular cross-section. The average diameter of the glass fibers may be from 1-25 micrometers (µm), preferably 3-20 µm, more preferably 4-18 µm, even more preferably 5-17 µm. The glass fiber may be a short glass fiber having a diameter of 10 µm or 14 µm. In an aspect, the glass fiber has a circular cross-section. Flat glass or bilobe fibers may be used to provide, for example, low warp-high strength-high elongation articles.

The glass fiber may have a round (or circular), flat, or irregular cross-section. Thus, use of non-round fiber cross sections is possible. However, in some examples, the glass fiber may have a circular cross-section. The width or diameter of the glass fiber may be from about 1 to about 20 µm, or from about 5 to about 20 µm. In a further example, the width or diameter of the glass fiber may be from about 5 to about 15 µm. In certain compositions, the glass fiber may have a width or diameter of about 14 µm.

The glass fibers may be bonding or non-bonding. As used herein, "non-bonding glass fiber" means the glass fiber is coated with a sizing composition that results in poor adhesion of the coated glass fiber to the polycarbonate matrix. In other words, a non-bonding glass fiber is coated with a sizing composition that is incompatible with the polycarbonate matrix, which is in contrast to a non-bonding glass fiber coated with a sizing composition that has improved adhesion with the polycarbonate matrix (herein referred to as "bonding glass fibers" because they are bonding with respect to the polycarbonate).

The reinforcing composition of the polycarbonate compositions covering the combination of glass fiber and mineral filler may be present from 11-25 wt%, 11-20 wt%, or 11-15 wt%, each based on the total weight of the composition. The reinforcing compositions include glass fibers and a mineral filler. The glass fibers may be present from 10-24 wt%, from 10-20 wt%, or 10-15 wt%. The mineral filler may be present from 1-10 wt%, 1-7 wt%, or 1-5 wt%, each based on the total weight of the composition.

The ratio of glass fibers to mineral filler may be greater than 1:2, or greater than 1:1. In some aspects, the wt% of glass fibers is equal than the wt% of the mineral filler. In some aspects, the wt% of glass fibers is greater than the wt% of mineral filler. In some aspects, the weight ratio of glass fibers to mineral filler may range from greater than 1:2 to 9:1 or from greater than 1:2 to 5:1. In some aspects, the ratio of glass fibers to mineral filler may range from greater than 1:1 to 9:1, 2:1 or greater, or from 2:1 to 9:1.

The polycarbonate compositions may include an organophosphorous flame retardant. In the aromatic organophosphorous compounds that have at least one organic aromatic group, the aromatic group may be a substituted or unsubstituted C₃₋₃₀ group containing one or more of a monocyclic or polycyclic aromatic moiety (which may optionally contain with up to three heteroatoms (N, O, P, S, or Si)) and optionally further containing one or more nonaromatic moieties, for example alkyl, alkenyl, alkynyl, or cycloalkyl. The aromatic moiety of the aromatic group may be directly bonded to the phosphorous-containing group, or bonded via another moiety, for example an alkylene group. The aromatic moiety of the aromatic group may be directly bonded to the phosphorous-containing group, or bonded via another moiety, for example an alkylene group. In an aspect the aromatic group is the same as an aromatic group of the polycarbonate backbone, such as a bisphenol group (e.g., bisphenol A), a monoarylene group (e.g., a 1,3-phenylene or a 1,4-phenylene), or a combination comprising at least one of the foregoing.

The phosphorous-containing group may be a phosphate (P(=O)(OR)₃), phosphite (P(OR)₃), phosphonate (RP(=O)(OR)₂), phosphinate (R₂P(=O)(OR)), phosphine oxide (R₃P(=O)), or phosphine (R₃P), wherein each R in the foregoing phosphorous-containing groups may be the same or different, provided that at least one R is an aromatic group. A combination of different phosphorous-containing groups may be used. The aromatic group may be directly or indirectly bonded to the phosphorous, or to an oxygen of the phosphorous-containing group (i.e., an ester).

In an aspect the aromatic organophosphorous compound is a monomeric phosphate. Representative monomeric aromatic phosphates are of the formula (GO)₃P=O, wherein each G is independently an alkyl, cycloalkyl, aryl, alkylarylene, or arylalkylene group having up to 30 carbon atoms, provided that at least one G is an aromatic group. Two of the G groups may be joined together to provide a cyclic group. In some aspects G corresponds to a monomer used to form the polycarbonate, e.g., resorcinol. Exemplary phosphates include phenyl bis(dodecyl) phosphate, phenyl bis(neopentyl) phosphate, phenyl bis(3,5,5'-trimethylhexyl) phosphate, ethyl diphenyl phosphate, 2-ethylhexyl di(p-tolyl) phosphate, bis(2-ethylhexyl) p-tolyl phosphate, tritolyl phosphate, bis(2-ethylhexyl) phenyl phosphate, tri(nonylphenyl) phosphate, bis(dodecyl) p-tolyl phosphate, dibutyl phenyl phosphate, 2-chloroethyl diphenyl phosphate, p-tolyl bis(2,5,5'-trimethylhexyl) phosphate, 2-ethylhexyl diphenyl phosphate, and the like. A specific aromatic phosphate is one in which each G is aromatic, for example, triphenyl phosphate, tricresyl phosphate, isopropylated triphenyl phosphate, and the like.

Di- or polyfunctional aromatic organophosphorous compounds are also useful, for example, compounds of the formulas 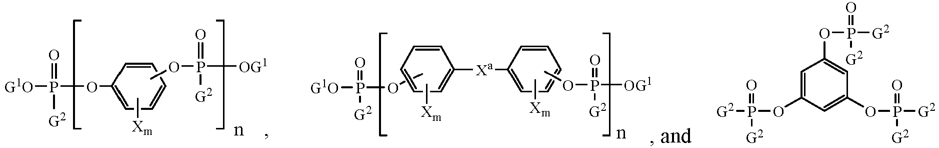 wherein each G¹ is independently a C₁₋₃₀ hydrocarbyl; each G² is independently a C₁₋₃₀ hydrocarbyl or hydrocarbyloxy; X^{a} is as defined in formula (3) or formula (4); each X is independently a bromine or chlorine; m is 0 to 4, and n is 1 to 30. In a specific aspect, x^{a} is a single bond, methylene, isopropylidene, or 3,3,5-trimethylcyclohexylidene.

Specific aromatic organophosphorous compounds are inclusive of acid esters of formula (9) 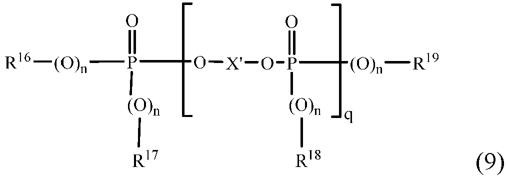 wherein each R¹⁶ is independently C₁₋₈ alkyl, C₅₋₆ cycloalkyl, C₆₋₂₀ aryl, or C₇₋₁₂ arylalkylene, each optionally substituted by C₁₋₁₂ alkyl, specifically by C₁₋₄ alkyl and X' is a mono- or poly-nuclear aromatic C₆₋₃₀ moiety or a linear or branched C₂₋₃₀ aliphatic radical, which may be OH-substituted and may contain up to 8 ether bonds, provided that at least one R¹⁶ or X' is an aromatic group; each n is independently 0 or 1; and q is from 0.5 to 30. In some aspects each R¹⁶ is independently C₁₋₄ alkyl, naphthyl, phenyl(C₁₋₄)alkylene, aryl groups optionally substituted by C₁₋₄ alkyl; each X' is a mono- or poly-nuclear aromatic C₆₋₃₀ moiety, each n is 1; and q is from 0.5 to 30. In some aspects each R¹⁶ is aromatic, e.g., phenyl; each X' is a mono- or poly-nuclear aromatic C₆₋₃₀ moiety, including a moiety derived from formula (2); n is one; and q is from 0.8 to 15. In other aspects, each R¹⁶ is phenyl; X' is cresyl, xylenyl, propylphenyl, or butylphenyl, one of the following divalent groups 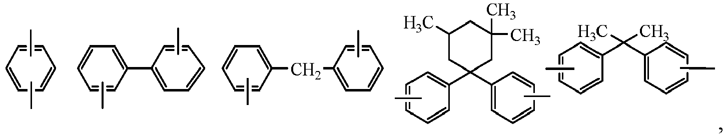 or a combination comprising one or more of the foregoing; n is 1; and q is from 1 to 5, or from 1 to 2. In some aspects at least one R¹⁶ or X' corresponds to a monomer used to form the polycarbonate, e.g., bisphenol A, resorcinol, or the like. Aromatic organophosphorous compounds of this type include the bis(diphenyl) phosphate of hydroquinone, resorcinol bis(diphenyl phosphate) (RDP), and bisphenol A bis(diphenyl) phosphate (BPADP), and their oligomeric and polymeric counterparts.

The organophosphorous flame retardant containing a phosphorous-nitrogen bond may be a phosphazene, phosphonitrilic chloride, phosphorous ester amide, phosphoric acid amide, phosphonic acid amide, phosphinic acid amide, or tris(aziridinyl) phosphine oxide. These flame-retardant additives are commercially available. In an aspect, the organophosphorous flame retardant containing a phosphorous-nitrogen bond is a phosphazene or cyclic phosphazene of the formulas 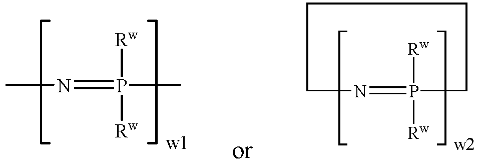 wherein w1 is 3 to 10,000; w2 is 3 to 25, or 3 to 7; and each R^{w} is independently a C₁₋₁₂ alkyl, alkenyl, alkoxy, aryl, aryloxy, or polyoxyalkylene group. In the foregoing groups at least one hydrogen atom of these groups may be substituted with a group having an N, S, O, or F atom, or an amino group. For example, each R^{w} may be a substituted or unsubstituted phenoxy, an amino, or a polyoxyalkylene group. Any given R^{w} may further be a crosslink to another phosphazene group. Exemplary crosslinks include bisphenol groups, for example bisphenol A groups. Examples include phenoxy cyclotriphosphazene, octaphenoxy cyclotetraphosphazene decaphenoxy cyclopentaphosphazene, and the like. In an aspect, the phosphazene has a structure represented by the formula

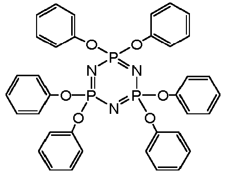

Commercially available phenoxyphosphazenes having the aforementioned structures are LY202 manufactured and distributed by Lanyin Chemical Co., Ltd, FP-110 manufactured and distributed by Fushimi Pharmaceutical Co., Ltd, and SPB-100 manufactured and distributed by Otsuka Chemical Co., Ltd.

The organophosphorous flame retardant may be present up to 1.5 wt%, up to 1.2 wt%, up to 1.0 wt%, up to 0.8 wt%, up to 0.6 wt%, or up to 0.4 wt%, each based on the total weight of the composition.

The polycarbonate compositions may include flame retardants in addition to the organophosphorous flame retardant. Inorganic flame retardants may also be used, for example salts of C₂₋₁₆ alkyl sulfonates such as potassium perfluorobutane sulfonate (Rimar salt), potassium perfluoroctane sulfonate, and tetraethylammonium perfluorohexane sulfonate, salts of aromatic sulfonates such as sodium benzene sulfonate, sodium toluene sulfonate (NATS), and the like, salts of aromatic sulfone sulfonates such as potassium diphenylsulfone sulfonate (KSS), and the like; salts formed by reacting for example an alkali metal or alkaline earth metal (e.g., lithium, sodium, potassium, magnesium, calcium and barium salts) and an inorganic acid complex salt, for example, an oxo-anion (e.g., alkali metal and alkaline-earth metal salts of carbonic acid, such as Na₂CO₃, K₂CO₃, MgCO₃, CaCO₃, and BaCO₃, or a fluoro-anion complex such as Li₃AlF₆, BaSiF₆, KBF₄, K₃AlF₆, KAlF₄, K₂SiF₆, or Na₃AlF₆ or the like. Rimar salt and KSS and NATS, alone or in combination with other flame retardants, are particularly useful. Rimar salt and KSS and NATS, alone or in combination with other flame retardants, are particularly useful. The perfluoroalkyl sulfonate salt may be present in an amount of 0.30 to 1.00 wt%, preferably, 0.40 to 0.80 wt%, more preferably, 0.45 to 0.70 wt%, based on the total weight of the composition. The aromatic sulfonate salt may be present in the final polycarbonate composition in an amount of 0.01 to 0.1 wt%, preferably, 0.02 to 0.06 wt%, and more preferably, 0.03 to 0.05 wt%. Exemplary amounts of aromatic sulfone sulfonate salt may be 0.01 to 0.6 wt%, preferably, 0.1 to 0.4 wt%, and more preferably, 0.25 to 0.35 wt%, based on the total weight of the polycarbonate composition.

Halogenated materials may also be used as flame retardants in addition to the organophosphorous flame retardant, for example bisphenols of which the following are representative: 2,2-bis-(3,5-dichlorophenyl)-propane; bis-(2-chlorophenyl)-methane; bis(2,6-dibromophenyl)-methane; 1,1-bis-(4-iodophenyl)-ethane; 1,2-bis-(2,6-dichlorophenyl)-ethane; 1,1-bis-(2-chloro-4-iodophenyl)ethane; 1,1-bis-(2-chloro-4-methylphenyl)-ethane; 1,1-bis-(3,5-dichlorophenyl)-ethane; 2,2-bis-(3-phenyl-4-bromophenyl)-ethane; 2,6-bis-(4,6-dichloronaphthyl)-propane; and 2,2-bis-(3,5-dichloro-4-hydroxyphenyl)-propane 2,2 bis-(3-bromo-4-hydroxyphenyl)-propane. Other halogenated materials include 1,3-dichlorobenzene, 1,4-dibromobenzene, 1,3-dichloro-4-hydroxybenzene, and biphenyls such as 2,2'-dichlorobiphenyl, polybrominated 1,4-diphenoxybenzene, 2,4'-dibromobiphenyl, and 2,4'-dichlorobiphenyl as well as decabromo diphenyl oxide, as well as oligomeric and polymeric halogenated aromatic compounds, such as a copolycarbonate of bisphenol A and tetrabromobisphenol A and a carbonate precursor, e.g., phosgene. Metal synergists, e.g., antimony oxide, may also be used with the flame retardant. When present, halogen containing flame retardants are present in amounts of 1 to 25 parts by weight, more preferably 2 to 20 parts by weight, based on 100 parts by weight of the total composition, excluding any filler.

Anti-drip agents may also be used in the composition, for example a fibril forming or non-fibril forming fluoropolymer such as polytetrafluoroethylene (PTFE). The anti-drip agent may be encapsulated by a rigid copolymer, for example styrene-acrylonitrile copolymer (SAN). PTFE encapsulated in SAN is known as TSAN. An TSAN comprises 50 wt% PTFE and 50 wt% SAN, based on the total weight of the encapsulated fluoropolymer. The SAN may comprise, for example, 75 wt% styrene and 25 wt% acrylonitrile based on the total weight of the copolymer. Anti-drip agents may be used in amounts of 0.1 to 10 parts by weight, based on 100 parts by weight of the total composition, excluding any filler.

The polycarbonate compositions may include a polycarbonate comprising a linear bisphenol A homopolycarbonate; a poly(carbonate-siloxane) present in an amount effective to provide 1-10 wt% total siloxane, based on the total weight of the composition; and 11-25 wt% of a reinforcing composition comprising 10-24 wt% glass fibers and 1-10 wt% mineral filler. The polycarbonate compositions may include a poly(carbonate-siloxane) copolymer comprising 10 wt% or less siloxane content, a poly(carbonate-siloxane) copolymer comprising greater than 10 to less than 30 wt% siloxane content, a poly(carbonate-siloxane) copolymer comprising 30-70 wt% siloxane content, or a combination thereof, each based on the total weight of each poly(carbonate-siloxane) copolymer.

The polycarbonate compositions may include a polycarbonate comprising a linear bisphenol A homopolycarbonate and a brominated polycarbonate; a poly(carbonate-siloxane) present in an amount effective to provide 1-10 wt% total siloxane, based on the total weight of the composition; and 11-25 wt% of a reinforcing composition comprising 10-24 wt% glass fibers and 1-10 wt% mineral filler. The polycarbonate compositions may include a poly(carbonate-siloxane) copolymer comprising 10 wt% or less siloxane content, a poly(carbonate-siloxane) copolymer comprising greater than 10 to less than 30 wt% siloxane content, a poly(carbonate-siloxane) copolymer comprising 30-70 wt% siloxane content, or a combination thereof, each based on the total weight of each poly(carbonate-siloxane) copolymer.

The polycarbonate compositions may include a polycarbonate comprising a linear bisphenol A homopolycarbonate and a poly(ester-carbonate-siloxane); a poly(carbonate-siloxane) present in an amount effective to provide 1-10 wt% total siloxane, based on the total weight of the composition; and 11-25 wt% of a reinforcing composition comprising 10-24 wt% glass fibers and 1-10 wt% mineral filler. In some aspects, the poly(ester-carbonate-siloxane) comprises bisphenol A carbonate units, isophthalate-terephthalate-bisphenol A ester units, and siloxane units, for example blocks containing 5 to 200 dimethylsiloxane units. The polycarbonate compositions may include a poly(carbonate-siloxane) copolymer comprising 10 wt% or less siloxane content, a poly(carbonate-siloxane) copolymer comprising greater than 10 to less than 30 wt% siloxane content, a poly(carbonate-siloxane) copolymer comprising 30-70 wt% siloxane content, or a combination thereof, each based on the total weight of each poly(carbonate-siloxane) copolymer.

The polycarbonate compositions may include a polycarbonate comprising a poly(aliphatic ester-carbonate) and a poly(ester-carbonate-siloxane); a poly(carbonate-siloxane) present in an amount effective to provide 1-10 wt% total siloxane, based on the total weight of the composition; and 11-25 wt% of a reinforcing composition comprising 10-24 wt% glass fibers and 1-10 wt% mineral filler. In some aspects, the poly(aliphatic ester-carbonate) comprises bisphenol A carbonate units and sebacic acid-bisphenol A ester units. In some aspects, the poly(ester-carbonate-siloxane) comprises bisphenol A carbonate units, isophthalate-terephthalate-bisphenol A ester units, and siloxane units, for example blocks containing 5 to 200 dimethylsiloxane units. The polycarbonate compositions may include a poly(carbonate-siloxane) copolymer comprising 10 wt% or less siloxane content, a poly(carbonate-siloxane) copolymer comprising greater than 10 to less than 30 wt% siloxane content, a poly(carbonate-siloxane) copolymer comprising 30-70 wt% siloxane content, or a combination thereof, each based on the total weight of each poly(carbonate-siloxane) copolymer.

The polycarbonate compositions may include a polycarbonate comprising a poly(phthalate-carbonate); a poly(carbonate-siloxane) present in an amount effective to provide 1-10 wt% total siloxane, based on the total weight of the composition; and 5-25 wt% of a reinforcing composition comprising 11-24 wt% glass fibers and 1-10 wt% mineral filler. In some aspects, the poly(phthalate-carbonate)comprises bisphenol A carbonate units and isophthalate-terephthalate-bisphenol A ester units. The polycarbonate compositions may include a poly(carbonate-siloxane) copolymer comprising 10 wt% or less siloxane content, a poly(carbonate-siloxane) copolymer comprising greater than 10 to less than 30 wt% siloxane content, a poly(carbonate-siloxane) copolymer comprising 30-70 wt% siloxane content, or a combination thereof, each based on the total weight of each poly(carbonate-siloxane) copolymer.

The polycarbonate compositions may include a polycarbonate comprising a poly(ester-carbonate); a poly(carbonate-siloxane) present in an amount effective to provide 1-10 wt% total siloxane, based on the total weight of the composition; and 11-25 wt% of a reinforcing composition comprising 10-24 wt% glass fibers and 1-10 wt% mineral filler. In some aspects, the poly(ester-carbonate) comprises resorcinol isophthalate and terephthalate units and bisphenol A carbonate units. The polycarbonate compositions may include a poly(carbonate-siloxane) copolymer comprising 10 wt% or less siloxane content, a poly(carbonate-siloxane) copolymer comprising greater than 10 to less than 30 wt% siloxane content, a poly(carbonate-siloxane) copolymer comprising 30-70 wt% siloxane content, or a combination thereof, each based on the total weight of each poly(carbonate-siloxane) copolymer.

The polycarbonate compositions may be manufactured by various methods. For example, powdered polycarbonate, and optional components are first blended, optionally with fillers in a HENSCHEL high speed mixer. Other low shear processes, including but not limited to hand mixing, may also accomplish this blending. The blend is then fed into the throat of a twin-screw extruder via a hopper. Alternatively, at least one of the components may be incorporated into the composition by feeding directly into the extruder at the throat or downstream through a side-stuffer. Additives may also be compounded into a masterbatch with a desired polymeric polymer and fed into the extruder. The extruder is generally operated at a temperature higher than that necessary to cause the composition to flow. The extrudate is immediately quenched in a water bath and pelletized. The pellets so prepared may be about 6 mm (one-fourth inch) long or less as desired. Such pellets may be used for subsequent molding, shaping, or forming.

Shaped, formed, or molded articles comprising the polycarbonate compositions are also provided. The polycarbonate compositions may be molded into useful shaped articles by a variety of methods, such as injection molding, extrusion, rotational molding, blow molding and thermoforming. In an aspect, the article is an extruded article, a molded article, pultruded article, a thermoformed article, a foamed article, a layer of a multi-layer article, a substrate for a coated article, or a substrate for a metallized article.

Transportation components, in particular interior train components that are molded or extruded from the polycarbonate compositions are also provided. Molding may be by a variety of means such as injection molding, rotational molding, blow molding, and the like. In an aspect, the molding is by injection molding. Illustrative claddings include, for example interior vertical surfaces, such as side walls, front walls, end-walls, partitions, room dividers, flaps, boxes, hoods and louvres; interior doors and linings for internal and external doors; window insulations, kitchen interior surfaces, interior horizontal surfaces, such as ceiling paneling, flaps, boxes, hoods and louvres; luggage storage areas, such as overhead and vertical luggage racks, luggage containers and compartments; driver's desk applications, such as paneling and surfaces of driver's desk; interior surfaces of gangways, such as interior sides of gangway membranes (bellows) and interior linings; window frames (including sealants and gaskets); (folding) tables with downward facing surface; interior and exterior surface of air ducts, and devices for passenger information (such as information display screens) and the like.

Data in the Examples shows that the compositions herein may meet the requirements for HL2, for both R1 and R6 applications.

While the compositions described herein are designed for use preferably in railway interiors, it is to be understood that the compositions are also useful in other interior components that are required to meet the test standards for HL2 for both R1 and R6 applications. Interior bus components are preferably mentioned. Current discussions directed to increasing bus safety include proposals to apply the HL2 standards to interior bus components. This invention accordingly includes interior bus components, including seat components and claddings as described above and comprising the preferred compositions described herein, and particularly below, that meet the tests specified in the HL2 standards described above.

In a particularly advantageous feature, the compositions described herein may meet other stringent standards for railway applications. For example, for interior applications used in the United States railway market, materials need to fulfill meet NFPA 130 (2010 edition). This standard imposes requirements on rate of smoke generation and surface flammability. The generation of smoke is measured via the ASTM E662-12 smoke density test and the requirements are a preferred smoke density after 1.5 min (Ds1.5) of 100 and less and a preferred smoke density after 4 min (Ds4) of 200 and less, in either flaming or non-flaming mode. Surface flammability is measured via the ASTM E162-12a flame spread test and the requirements are a maximum flame spread index (Is) of 35 and less, and no flaming, running or dripping allowed. It is calculated from multiplying the flame spread factor (Fs) and the heat evolution factor (Q) determined during the test. Certain of the more preferred compositions described herein, and particularly below, may also meet these standards.

This disclosure is further illustrated by the following examples, which are nonlimiting.

### EXAMPLES

The following components are used in the examples. Unless specifically indicated otherwise, the amount of each component is in wt%, based on the total weight of the composition.

The materials shown in Table 2 were used.

**Table 2.**

| Component | Description | Source |
|---|---|---|
| | | |
| PC-Si-1 | Poly(bisphenol A carbonate-dimethylsiloxane) copolymer produced via interfacial polymerization using tubular reactor process, 6 wt% siloxane, average siloxane block length = 45 units (D45), Mw = 22,500-23,500 g/mol, as determined by GPC using polystyrene standards and calculated for polycarbonate, para-cumylphenol (PCP) end-capped | SABIC |
| PC-Si-2 | Poly(bisphenol A carbonate-dimethylsiloxane) copolymer having a siloxane content of 40 weight percent, average PDMS block length of 45 units, having a Mw of 37,000 to 38,000 grams per mole as determined by GPC using polystyrene standards and calculated for polycarbonate, produced by interfacial polymerization and endcapped with p-cumylphenol | SABIC |
| PC-Si-3 | Poly(bisphenol A carbonate-dimethylsiloxane) copolymer produced via interfacial polymerization, 20 wt% siloxane, average siloxane block length = 45 units (D45), Mw = 29,000-31,000 g/mol as per GPC using polystyrene standards and calculated for polycarbonate, para-cumylphenol (PCP) end-capped, | SABIC |
| PC-1 | Linear Bisphenol A polycarbonate homopolymer, prepared by interfacial process, Mw = 21,000-23,000 g/mol as per GPC using polystyrene standards and calculated for polycarbonate, para-cumylphenol (PCP) end-capped | SABIC |
| PC-2 | Isophthalic acid-terephthalic acid-resorcinol (ITR) - BPA copolyester-carbonate, 19 mol % ITR, produced via interfacial polymerization, Mw of 29,000-31,000 g/mol as determined by GPC using polystyrene standards and calculated for polycarbonate, para-cumylphenol (PCP) end-capped | SABIC |
| PC-3 | Poly(bisphenol A carbonate-bisphenol A phthalate) having 19-21 wt% bisphenol A carbonate units and 79-81 wt% bisphenol A phthalate groups with an isophthalate:terephthalate ratio of 93:7; Mw = 27,000-29,000 as per GPC using polystyrene standards and calculated for polycarbonate, para-cumylphenol (PCP) end-capped | SABIC |
| PC-4 | Poly(bisphenol A/resorcinol carbonate-resorcinol phthalate-dimethyl siloxane) having 8-12 mol% bisphenol A carbonate linkages, 8-12 mol% resorcinol carbonate linkages, 78-82 mol% resorcinol phthalate ester linkages with an isophthalate:terephthalate ratio of 1:1, and 0.8-1.2 wt% of a eugenol-linked D10 dimethylsiloxane; para-cumyl phenol endcapped; Mw = 22,500-26,500 g/mol as per GPC using polystyrene standards and calculated for polycarbonate | SABIC |
| PC-5 | Linear Bisphenol A polycarbonate homopolymer, prepared by interfacial process, Mw = 18,000-20,000 g/mol as per GPC using polystyrene standards and calculated for polycarbonate; para-cumylphenol (PCP) end-capped | SABIC |
| Br-PC | Tetrabromo-bisphenol A-co-bisphenol A, bromine content of 26 wt%, Mw = 22,500 to 24,500 /mol as per GPC using polystyrene standards and calculated for polycarbonate; para-cumylphenol (PCP) end-capped | SABIC |
| PC-7 | Sebacic acid-bisphenol A copolymer, 8.5 mol% sebacic acid, produced via interfacial process, p-cumylphenol endcap, Mw = 35,000 -37,000, determined via GPC using polystyrene standards and calculated for polycarbonate | SABIC |
| PPZ | Phenoxycyclophosphazene (13.5 wt% phosphorous); obtained as RABITLE FP-110 | Fushimi Pharmaceutical Co., Ltd. |
| NBGF | Non-bonding glass fiber, 4 mm chopped strands, available as CRATEC | OWENS CORNING |
| Talc | Talc powder, available as JETFINE 3CA | IMERYS |
| P-FR | Oligomeric phosphate ester, available as FYROLFLEX SOL-DP (10.7 wt% phosphorous) | ICL INDUSTRIAL |
| BPADP | Bisphenol A bis(diphenylphosphate), available as CR-741 (8.6 wt% phosphorous) | DAIHACHI Chemical Industry Co., Ltd. |

The testing samples were prepared as described below and the following test methods were used.

Typical compounding procedures are described as follows: All raw materials were compounded on a 25 mm Werner Pfleiderer ZSK co-rotating twin-screw extruder with a vacuum vented standard mixing screw operated at a screw speed of 300 rpm. The glass fiber was added via side-feeder positioned down-stream. The temperature profile is given in Table 1. The strand was cooled through a water bath prior to pelletizing. The pellets were dried for 3-4 hours at 90-110 °C in a forced air-circulating oven prior to injection molding. A typical extrusion profile is listed in Table 3.

**Table 3.**

| Parameters | Unit | 25 mm ZSK |
|---|---|---|
| Die | - | 2 holes |
| Feed temperature | °C | 40 |
| Zone 1 temp. | °C | 180-220 |
| Zone 2-8 temp. | °C | 250-310 |
| Die temperature | °C | 280-320 |
| Screw speed | rpm | 300 |
| Throughput | kg/h | 15-25 |
| Vacuum 1 | bar | ~0.7 |

An Engel 45, 75, 90 molding machine was used to mold the test parts for standard physical property testing. (for parameters see Table 4).

**Table 4.**

| Parameters | Unit | |
|---|---|---|
| Pre-drying time | h | 34 |
| Pre-drying temp. | °C | 90-110 |
| Hopper temp. | °C | 40 |
| Zone 1 temp. | °C | 260-290 |
| Zone 2 temp. | °C | 270-300 |
| Zone 3 temp. | °C | 280-310 |
| Nozzle temp. | °C | 275-305 |
| Mold temperature | °C | 75-100 |
| Screw speed | rpm | 25 |
| Back pressure | bar | 5 |
| Injection time | s | 1.9 |
| Approx. cycle time | s | 45 |

Sample preparation and testing methods are described in Table 5.

**Table 5.**

| Property | Standard | Conditions | Specimen Type |
|---|---|---|---|
| ISO Smoke Density (DS4) | ISO 5659-2 | 50 kW/m² | 75 x 75 x 3 mm; |
| Charpy Notched impact (CNI) | ISO 179/1eA | 23 °C | 80x10x4 mm |
| ISO Heat Release (MAHRE) | ISO 5660-1 | 50 kW/m² | 100x 100 x 3 mm; |
| Tensile modulus | ISO 527 | 23 °C, Type I, 50 mm/min | Bar- 57.0 mm x 13.0mm x 3.2 mm |

### Examples 1-12

Table 6 shows the compositions and properties for Examples 1-8 and Comparative Examples 9-12.

**Table 6.**

| | Units | 1 | 2 | 3 | 4 | 5 | 6 | 7 | 8 | 9* | 10* | 11* | 12* |
|---|---|---|---|---|---|---|---|---|---|---|---|---|---|
| PC-1 | wt% | 48 | 38 | 38 | 39 | 45 | 53 | 46 | 43 | 53 | 43 | 39 | 44 |
| PC-Si-1 | wt% | 25 | 25 | 25 | 25 | 25 | 20 | 25 | 25 | 25 | 25 | 25 | 25 |
| PC-Si2 | wt% | 10 | 10 | 10 | 10 | 10 | 5 | 10 | 10 | 10 | 10 | 10 | 10 |
| NB GF | wt% | 10 | 20 | 20 | 15 | 15 | 15 | 10 | 15 | 10 | 20 | 20 | 15 |
| Talc | wt% | 5 | 5 | 5 | 5 | 2.5 | 2.5 | 2.5 | 2.5 | | | | |
| P-FR | wt% | | | | 4 | | 2 | 4 | 2 | | | 4 | 4 |
| Total | wt% | 100 | 100 | 100 | 100 | 100 | 100 | 100 | 100 | 100 | 100 | 100 | 100 |
| Total Filler | wt% | 15 | 25 | 25 | 20 | 17.5 | 17.5 | 12.5 | 17.5 | 10 | 20 | 20 | 15 |
| Ratio GF: Talc | | 2:1 | 4:1 | 4:1 | 3:1 | 6:1 | 6:1 | 4:1 | 6:1 | | | | |
| %P | wt% | 0 | 0 | 0 | 0.43 | 0 | 0.21 | 0.43 | 0.21 | 0 | 0 | 0.43 | 0.43 |
| % siloxane | wt% | 5.5 | 5.5 | 5.5 | 5.5 | 5.5 | 5.5 | 5.5 | 5.5 | 5.5 | 5.5 | 5.5 | 5.5 |
| Properties | | | | | | | | | | | | | |
| CNI 23° | kJ/m² | 16 | 13 | 13 | 10 | 17 | 12 | 14 | 14 | 28 | 21 | 16 | 18 |
| Tens. mod. | MPa | 3800 | 5504 | 5504 | 5289 | 4492 | 5031 | 3972 | 4825 | 3559 | 5592 | 5766 | 4631 |
| DS4 | | 161 | 165 | 165 | 171 | 206 | 171 | 233 | 223 | 255 | 293 | 347 | 333 |
| MAHRE | kW/ m² | 90 | 63 | 63 | 64 | 77 | 59 | 68 | 71 | 114 | 95 | 91 | 80 |

| | | | | | | | | | | | | | |
|---|---|---|---|---|---|---|---|---|---|---|---|---|---|
| *Comparative Examples | | | | | | | | | | | | | |

The compositions of Examples 1-8 which include homopolycarbonate and poly(carbonate-siloxane)s (PC-Si-1) and (PC-Si-2) provide the desired combination of properties: a DS4 of less than or equal to 300 and a MAHRE value of 90 or less. Examples 1-3 show that the combination of glass fibers (NBGF) and talc provide the desired properties. In Examples 1-3, the ratio of glass fibers to talc ranges from 2:1 to 4:1. Decreasing the loading of talc did not adversely affect the properties as shown in Example 5 (compare Example 5 with Examples 1-3). Examples 4 and 6-8 show that when the organophosphorous flame retardant (P-FR) is incorporated, DS4 and MAHRE values are in the desired ranges. Comparative Examples 9-10 that include glass fibers and exclude talc, provide DS4 values in the desired range, but the MAHRE values are outside of the desired range. Comparative Example 11 that includes glass fibers (20 wt%), excludes talc, but includes an organophosphorous flame retardant (4 wt%, 0.43 wt% phosphorous) result in both DS4 and MAHRE values outside of the desired ranges. Comparative Example 12 that has a decreased loading of glass fibers (15 wt%), results in a DS4 value outside of the desired range and a MAHRE value within the desired range.

In conclusion, using only 10-20% glass fiber as the only filler in compositions containing polycarbonate, polycarbonate-siloxane copolymer and optionally an organophosphorous flame retardant may result in smoke density and/or heat release properties borderline or above the thresholds required for meeting the R6-HL2 requirements for the EN45545 European railway standard (i.e., DS4 of less than 300 and a MAHRE of less than 90 kW/m², as shown for Comparative Examples 9-12). Using a combination of glass fiber and a mineral filler like talc results in a synergistic effect reducing both smoke density DS4 values below 250 and MAHRE values below 90 kW/m² at similar total loadings of 10-25 wt% of a reinforcing composition.

### Examples 13-24

Table 7 shows the compositions and properties for Examples 13-24.

**Table 7**

| | Units | 13 | 14 | 15 | 16 | 17 | 18 | 19 | 20 | 21 | 22 | 23 | 24 |
|---|---|---|---|---|---|---|---|---|---|---|---|---|---|
| PC-1 | wt% | 53 | 33 | | | 58.5 | 52.75 | 54 | 53.5 | 20 | 10 | | |
| PC-Si-1 | wt% | 20 | 20 | | | | 20 | 20 | | | | | 20 |
| PC-Si-3 | wt% | | | | | | | | | | 20 | | |
| PC-Si-2 | wt% | 10 | 10 | 10 | 10 | 10 | 10 | 10 | 10 | 10 | | 10 | 10 |
| PC-2 | wt% | | | | | | | | | | | 53.5 | |
| PC-3 | wt% | | | | | | | | 20 | 53.5 | 53.5 | | |
| PC-5 | wt% | | | | | | | | | | | | 53.5 |
| Br-PC | wt% | | | | | 15 | | | | | | | |
| PC-7 | wt% | | | 73.5 | 53.5 | | | | | | | | |
| PC-4 | wt% | | 20 | | 20 | | | | | | | | |
| NB GF | wt% | 11 | 11 | 11 | 11 | 11 | 11 | 11 | 11 | 11 | 11 | 11 | 11 |
| Talc | wt% | 2.5 | 2.5 | 2.5 | 2.5 | 2.5 | 2.5 | 2.5 | 2.5 | 2.5 | 2.5 | 2.5 | 2.5 |
| SOLDP | wt% | 3 | 3 | 3 | 3 | 3 | | | 3 | 3 | 3 | | 3 |
| BPA-DP | wt% | | | | | | 3.75 | | | | | | |
| PZP | wt% | | | | | | | 2.4 | | | | 2.4 | |
| Total | wt% | 100 | 100 | 100 | 100 | 100 | 100 | 100 | 100 | 100 | 100 | 100 | 100 |
| Total filler | wt% | 13.5 | 13.5 | 13.5 | 13.5 | 13.5 | 13.5 | 13.5 | 13.5 | 13.5 | 13.5 | 13.5 | 13.5 |
| Ratio GF :talc | - | 4.4 | 4.4 | 4.4 | 4.4 | 4.4 | 4.4 | 4.4 | 4.4 | 4.4 | 4.4 | 4.4 | 4.4 |
| Siloxane content | wt% | 5.2 | 5.2 | 4 | 4 | 4 | 5.2 | 5.2 | 4 | 4 | 4 | 4 | 5.2 |
| P content | wt% | 0.32 | 0.32 | 0.32 | 0.32 | 0.32 | 0.32 | 0.32 | 0.32 | 0.32 | 0.32 | 0.32 | 0.32 |
| CNI 23° | kJ/m² | 15 | 14 | 25 | 29 | 13 | 13 | 16 | 15 | 14 | 14 | 21 | 9 |
| Tens. mod. | MPa | 3836 | 3965 | 3795 | 4017 | 4273 | 4131 | 3902 | 4047 | 3844 | 4044 | 3963 | 4230 |
| DS4 | | 227 | 151 | 243 | 234 | 249 | 191 | 176 | 174 | 172 | 101 | 218 | 194 |
| MAHRE | kW/m² | 61 | 75 | - | 77 | - | 75 | 76 | 69 | 73 | 73 | 76 | 64 |

The compositions of Table 7 include a poly(carbonate-siloxane), a polycarbonate different from the poly(carbonate-siloxane), and reinforcing composition including a combination of glass fibers and talc. Examples 13-24 demonstrate that in compositions that include the combination of glass fibers and talc as the reinforcing composition (total loading of 13.5 wt%) that the desired combination of a DS4 value of less than or equal to 300 and a MAHRE value of 90 or less can be achieved. In such compositions, the polycarbonate different from the poly(carbonate-siloxane) includes: a linear BPA homopolycarbonate (e.g., Examples 13, 17-29, and 24); a combination of linear BPA homopolycarbonate and a poly(ester-carbonate-siloxane) (i.e., Example 15), a combination of a poly(ester-carbonate-siloxane) and poly(aliphatic ester-carbonate) (i.e., Example 16), a combination of poly(phthalate-carbonate) and a linear BPA homopolycarbonate (i.e., Example 20-22), or a poly(ester-carbonate) (i.e., Example 23).

The compositions, methods, and articles may alternatively comprise, consist of, or consist essentially of, any appropriate materials, steps, or components herein disclosed. The compositions, methods, and articles may additionally, or alternatively, be formulated so as to be devoid, or substantially free, of any materials (or species), steps, or components, that are otherwise not necessary to the achievement of the function or objectives of the compositions, methods, and articles.

All ranges disclosed herein are inclusive of the endpoints, and the endpoints are independently combinable with each other (e.g., ranges of "up to 25 wt%, or, more specifically, 5 wt% to 20 wt%", is inclusive of the endpoints and all intermediate values of the ranges of "5 wt% to 25 wt%," etc.). "Combinations" is inclusive of blends, mixtures, alloys, reaction products, and the like. The terms "first," "second," and the like, do not denote any order, quantity, or importance, but rather are used to distinguish one element from another. The terms "a" and "an" and "the" do not denote a limitation of quantity and are to be construed to cover both the singular and the plural, unless otherwise indicated herein or clearly contradicted by context. "Or" means "and/or" unless clearly stated otherwise. Reference throughout the specification to "some aspects", "an aspect", and so forth, means that a particular element described in connection with the aspect is included in at least one aspect described herein, and may or may not be present in other aspects. In addition, it is to be understood that the described elements may be combined in any suitable manner in the various aspects. A "combination thereof" is open and includes any combination comprising at least one of the listed components or properties optionally together with a like or equivalent component or property not listed

Unless specified to the contrary herein, all test standards are the most recent standard in effect as of the filing date of this application, or, if priority is claimed, the filing date of the earliest priority application in which the test standard appears.

Unless defined otherwise, technical and scientific terms used herein have the same meaning as is commonly understood by one of skill in the art to which this application belongs.

Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, -CHO is attached through carbon of the carbonyl group.

The term "alkyl" means a branched or straight chain, unsaturated aliphatic hydrocarbon group, e.g., methyl, ethyl, n-propyl, i-propyl, n-butyl, s-butyl, t-butyl, n-pentyl, s-pentyl, and n- and s-hexyl. "Alkenyl" means a straight or branched chain, monovalent hydrocarbon group having at least one carbon-carbon double bond (e.g., ethenyl (-HC=CH₂)). "Alkoxy" means an alkyl group that is linked via an oxygen (i.e., alkyl-O-), for example methoxy, ethoxy, and sec-butyloxy groups. "Alkylene" means a straight or branched chain, saturated, divalent aliphatic hydrocarbon group (e.g., methylene (-CH₂-) or, propylene (-(CH₂)₃-)). "Cycloalkylene" means a divalent cyclic alkylene group, -CₙH₂ₙ₋ₓ, wherein x is the number of hydrogens replaced by cyclization(s). "Cycloalkenyl" means a monovalent group having one or more rings and one or more carbon-carbon double bonds in the ring, wherein all ring members are carbon (e.g., cyclopentyl and cyclohexyl). "Aryl" means an aromatic hydrocarbon group containing the specified number of carbon atoms, such as phenyl, tropone, indanyl, or naphthyl. "Arylene" means a divalent aryl group. "Alkylarylene" means an arylene group substituted with an alkyl group. "Arylalkylene" means an alkylene group substituted with an aryl group (e.g., benzyl). The prefix "halo" means a group or compound including one more of a fluoro, chloro, bromo, or iodo substituent. A combination of different halo groups (e.g., bromo and fluoro), or only chloro groups may be present. The prefix "hetero" means that the compound or group includes at least one ring member that is a heteroatom (e.g., 1, 2, or 3 heteroatom(s)), wherein the heteroatom(s) is each independently N, O, S, Si, or P. "Substituted" means that the compound or group is substituted with at least one (e.g., 1, 2, 3, or 4) substituents that may each independently be a C₁₋₉ alkoxy, a C₁₋₉ haloalkoxy, a nitro (-NO₂), a cyano (-CN), a C₁₋₆ alkyl sulfonyl (-S(=O)₂-alkyl), a C₆₋₁₂ aryl sulfonyl (-S(=O)₂-aryl)a thiol (-SH), a thiocyano (-SCN), a tosyl (CH₃C₆H₄SO₂-), a C₃₋₁₂ cycloalkyl, a C₂₋₁₂ alkenyl, a C₅₋₁₂ cycloalkenyl, a C₆₋₁₂ aryl, a C₇₋₁₃ arylalkylene, a C₄₋₁₂ heterocycloalkyl, and a C₃₋₁₂ heteroaryl instead of hydrogen, provided that the substituted atom's normal valence is not exceeded. The number of carbon atoms indicated in a group is exclusive of any substituents. For example -CH₂CH₂CN is a C₂ alkyl group substituted with a nitrile.

## Claims

1. A polycarbonate composition comprising
a homopolycarbonate, or a combination of a homopolycarbonate and a brominated polycarbonate;
a poly(carbonate-siloxane) comprising 30-70 wt% siloxane content present in an amount effective to provide 1-10 wt% total siloxane, based on the total weight of the composition;
11-25 wt% of a reinforcing composition comprising
10-24 wt% glass fibers, and
1-10 wt% mineral filler comprising talc, kaolin, calcium carbonate, wollastonite, or a combination thereof;
optionally, an organophosphorous flame retardant in amount effective to provide up to 1.5 wt% phosphorous;
optionally, up to 10 wt% additive composition,
wherein each amount is based on the total weight of the polycarbonate composition, which sums to 100 wt%.

2. A polycarbonate composition comprising
a polycarbonate comprising a poly(aliphatic ester-carbonate), a poly(ester-carbonate-siloxane), a brominated polycarbonate, a poly(ester-carbonate), a poly(phthalate-carbonate), or a combination thereof and optionally, a homopolycarbonate;
a poly(carbonate-siloxane) present in an amount effective to provide 1-10 wt% total siloxane, based on the total weight of the composition;
11-25 wt% of a reinforcing composition comprising
10-24 wt% glass fibers, and
1-10 wt% mineral filler comprising talc, kaolin, calcium carbonate, wollastonite, or a combination thereof;
optionally, an organophosphorous flame retardant in amount effective to provide up to 1.5 wt% phosphorous;
optionally, up to 10 wt% additive composition,
wherein each amount is based on the total weight of the polycarbonate composition, which sums to 100 wt%.

3. The polycarbonate composition of Claim 1 or Claim 2, wherein a weight ratio of glass fibers to mineral filler is 1: 1 or greater, preferably 2: 1 or greater.

4. The polycarbonate composition of any one of the preceding claims, wherein a molded sample of the composition
has a smoke density after 4 min (DS4) measured on 3 mm thick plaque according to ISO 5659-2 of 300 or less; and
has a heat release (MAHRE) measured on a 3 mm thick plaque according to ISO 5660-1 of 90 kW/m² or less;
optionally, a molded sample of the composition has a critical heat flux at extinguishment (CFE) of 20 kW/m² or less measured according to ISO 5658-2 on a 3 mm thick plaque.

5. The polycarbonate composition of any one of Claims 2 to 4, wherein the poly(carbonate-siloxane) comprises
a poly(carbonate-siloxane) copolymer comprising 10 wt% or less siloxane content,
a poly(carbonate-siloxane) copolymer comprising greater than 10 wt% to less than 30 wt% siloxane content,
a poly(carbonate-siloxane) copolymer comprising 30-70 wt% siloxane content, or a combination thereof,
each based on the total weight of each poly(carbonate-siloxane) copolymer.

6. The polycarbonate composition of any one of the preceding claims, wherein the organophosphosphorous flame retardant comprises
a monomeric or oligomeric phosphate (P(=O)(OR)₃), phosphite (P(OR)₃), phosphonate (RP(=O)(OR)₂), phosphinate (R₂P(=O)(OR)), phosphine oxide (R₃P(=O)), or phosphine (R₃P), wherein each R in the may be the same or different, provided that at least one R is an aromatic group;
a monomeric or oligomeric compound having at least one phosphorous-nitrogen bond;
or a combination thereof.

7. The polycarbonate composition of any one of the preceding claims, wherein the organophosphosphorous flame retardant comprises 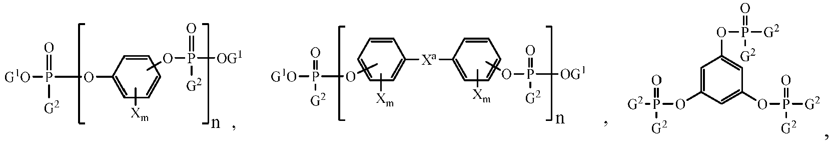 or a combination thereof,
wherein each occurrence of G¹ is independently a C₁₋₃₀ hydrocarbyl; each occurrence of G² is independently a C₁₋₃₀ hydrocarbyl or hydrocarbyloxy; X^{a} is single bond, -O-, -S-, -S(O)-, - S(O)₂-, -C(O)-, or a C₁₋₆₀ organic group; each X is independently a bromine or chlorine; m is 0 to 4, and n is 1 to 30; 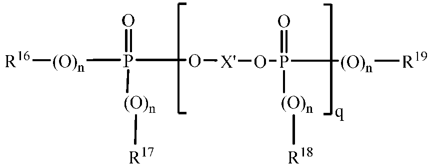
wherein R¹⁶, R¹⁷, R¹⁸, and R¹⁹ are each independently C₁₋₈ alkyl, C₅₋₆ cycloalkyl, C₆₋₂₀ aryl, or C₇₋₁₂ arylalkylene, each optionally substituted by C₁₋₁₂ alkyl, preferably by C₁₋₄ alkyl and X' is a mono- or poly-nuclear aromatic C₆₋₃₀ moiety or a linear or branched C₂₋₃₀ aliphatic radical, each optionally OH-substituted and optionally comprising up to 8 ether bonds, provided that at least one of R¹⁶, R¹⁷, R¹⁸, R¹⁹, and X' is an aromatic group;
or a combination thereof.

8. The polycarbonate composition of any one of the preceding claims, wherein the organophosphosphorous flame retardant comprises
a phosphazene, phosphonitrilic chloride, phosphorous ester amide, phosphoric acid amide, phosphonic acid amide, phosphinic acid amide, or tris(aziridinyl) phosphine oxide; or
a phosphazene or cyclic phosphazene of the formulas 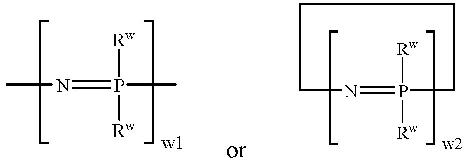
wherein w1 is 3 to 10,000; w2 is 3 to 25, or 3 to 7; and each R^{w} is independently a C₁₋₁₂ alkyl, alkenyl, alkoxy, aryl, aryloxy, or polyoxyalkylene group, optionally wherein at least one hydrogen atom is replaced with an N, S, O, or F atom, or an amino group.

9. The polycarbonate composition of any one of the preceding claims, wherein the mineral filler further comprises mica, clay, feldspar, quartz, quartzite, perlite, tripoli, diatomaceous earth, aluminum silicate, synthetic calcium silicate, fused silica, fumed silica, sand, boron-nitride powder, boron-silicate powder, calcium sulfate, calcium carbonates, talc, wollastonite, or a combination thereof.

10. The polycarbonate composition of any one of the preceding claims, wherein the additive composition comprises an antioxidant, a heat stabilizer, a light stabilizer, an ultraviolet light stabilizer, a plasticizer, a lubricant, a mold release agent, an antistatic agent, a colorant, a surface effect additive, a radiation stabilizer, a flame retardant different from the organophosphorous flame retardant, an anti-drip agent, or a combination thereof.

11. The polycarbonate composition of any one of Claims 1, 3, 4, and 6 to 10 comprising
a homopolycarbonate or a combination of a homopolycarbonate and a brominated polycarbonate;
a poly(carbonate-siloxane) having a siloxane content of 30-70 wt%, based on the total weight of the poly(carbonate-siloxane); and a poly(carbonate-siloxane) copolymer comprising 10 wt% or less siloxane content, a poly(carbonate-siloxane) copolymer comprising greater than 10 wt% to less than 30 wt% siloxane content, or a combination thereof;
11-25 wt% of a reinforcing composition comprising
10-24 wt% glass fibers;
1-10 wt% talc;
an organophosphorous flame retardant in amount effective to provide up to 1.5 wt% phosphorous;
optionally, up to 10 wt% additive composition,
wherein each amount is based on the total weight of the polycarbonate composition, which sums to 100 wt%.

12. The polycarbonate composition of any one of Claims 2 to 11 comprising
a polycarbonate comprising a poly(aliphatic ester-carbonate), a poly(ester-carbonate-siloxane), a brominated polycarbonate, a poly(ester-carbonate), a poly(phthalate-carbonate), or a combination thereof, and optionally, a homopolycarbonate;
a poly(carbonate-siloxane), wherein the poly(carbonate-siloxane) comprises
a poly(carbonate-siloxane) having a siloxane content of 30-70 wt%, based on the total weight of the poly(carbonate-siloxane),
a poly(carbonate-siloxane) having a siloxane content of up to 10 wt% and a poly(carbonate-siloxane) having a siloxane content of 30-70 wt%, each based on the total weight of each respective poly(carbonate-siloxane), or
a poly(carbonate-siloxane) having a siloxane content of greater than 10 to less than 30 wt%, based on the total weight of the poly(carbonate-siloxane);
11-25 wt% of a reinforcing composition comprising
10-24 wt% glass fibers;
1-10 wt% mineral filler comprising talc, kaolin, calcium carbonate, wollastonite, or a combination thereof;
an organophosphorous flame retardant in amount effective to provide up to 1.5 wt% phosphorous;
optionally, up to 10 wt% additive composition,
wherein each amount is based on the total weight of the polycarbonate composition, which sums to 100 wt%.

13. An article comprising the polycarbonate composition of any one of the preceding claims, preferably wherein the article is a railway component, preferably an interior railway component.

14. The article of claim 13, wherein the article comprises a seat component, an extruded interior train cladding, a molded interior train cladding, a table tray, a head rest, a privacy divider, a center console, an arm rest, a leg rest, a food tray, an end bay, a shroud, a kick panel, a foot well, literature pocket, a monitor, a bezel, a line replaceable unit, a foot bar, a luggage rack, a luggage container, a luggage compartment, a floor composite, a wall composite, an air duct, a strip, a device for passenger information, a window frame, an interior lining, an interior vertical surface, an interior door, a lining for an internal door, a lining for an external door, an interior horizontal surface, an electrical component, or a lighting component.

15. A method for forming the article according to claim 14, comprising molding, casting, or extruding the composition to provide the article.

## Patentansprüche

1. Eine Polycarbonatzusammensetzung, umfassend
ein Homopolycarbonat oder eine Kombination aus einem Homopolycarbonat und einem bromierten Polycarbonat;
ein Poly(carbonat-siloxan) mit einem Siloxangehalt von 30-70 Gew.-%, das in einer Menge vorliegt, die ausreicht, um 1-10 Gew.-% Gesamtsiloxan, bezogen auf das Gesamtgewicht der Zusammensetzung, bereitzustellen;
11-25 Gew.-% einer Verstärkungszusammensetzung, die 10-24 Gew.-% Glasfasern umfasst, und 1-10 Gew.-% mineralischen Füllstoff, umfassend Talk, Kaolin, Calciumcarbonat, Wollastonit oder eine Kombination davon;
optional ein organophosphorhaltiges Flammschutzmittel in einer Menge, die ausreicht, um bis zu 1,5 Gew.-% Phosphor bereitzustellen;
optional bis zu 10 Gew.-% Additivzusammensetzung,
wobei sich jede Menge auf das Gesamtgewicht der Polycarbonatzusammensetzung bezieht, das sich auf 100 Gew.-% summiert.

2. Eine Polycarbonatzusammensetzung, umfassend
ein Polycarbonat aufweisend ein Poly(aliphatisches Ester-Carbonat), ein Poly(ester-carbonat-siloxan), ein bromiertes Polycarbonat, ein Poly(ester-carbonat), ein Poly(phthalat-carbonat) oder eine Kombination davon und optional ein Homopolycarbonat;
ein Poly(carbonat-siloxan), das in einer Menge vorliegt, die ausreicht, um 1-10 Gew.-% Gesamtsiloxan, bezogen auf das Gesamtgewicht der Zusammensetzung, bereitzustellen;
11-25 Gew.-% einer Verstärkungszusammensetzung, die 10-24 Gew.-% Glasfasern umfasst, und 1-10 Gew.-% eines mineralischen Füllstoffs, der Talk, Kaolin, Calciumcarbonat, Wollastonit oder eine Kombination davon umfasst;
optional ein organophosphorhaltiges Flammschutzmittel in einer Menge, die ausreicht, um bis zu 1,5 Gew.-% Phosphor bereitzustellen;
optional bis zu 10 Gew.-% einer Additivzusammensetzung,
wobei sich jede Menge auf das Gesamtgewicht der Polycarbonatzusammensetzung bezieht, das sich auf 100 Gew.-% summiert.

3. Die Polycarbonatzusammensetzung nach Anspruch 1 oder Anspruch 2, wobei das Gewichtsverhältnis von Glasfasern zu mineralischem Füllstoff 1:1 oder größer, vorzugsweise 2:1 oder größer ist.

4. Die Polycarbonatzusammensetzung nach einem der vorstehenden Ansprüche, wobei eine geformte Probe der Zusammensetzung eine Rauchdichte nach 4 min (DS4), gemessen an einer 3 mm dicken Platte gemäß ISO 5659-2, von 300 oder weniger aufweist;
und eine Wärmeabgabe (MAHRE), gemessen an einer 3 mm dicken Platte gemäß ISO 5660-1, von 90 kW/m² oder weniger aufweist;
optional weist eine geformte Probe der Zusammensetzung einen kritischen Wärmefluss bei Löschung (CFE) von 20 kW/m² oder weniger auf, gemessen gemäß ISO 5658-2 an einer 3 mm dicken Platte.

5. Die Polycarbonatzusammensetzung nach einem der Ansprüche 2 bis 4, wobei das Poly(carbonat-siloxan)
ein Poly(carbonat-siloxan)-Copolymer mit einem Siloxangehalt von 10 Gew.-% oder weniger,
ein Poly(carbonat-siloxan)-Copolymer mit einem Siloxangehalt von mehr als 10 Gew.-% bis weniger als 30 Gew.-%,
ein Poly(carbonat-siloxan)-Copolymer mit einem Siloxangehalt von 30 bis 70 Gew.-%
oder eine Kombination davon umfasst, jeweils bezogen auf das Gesamtgewicht jedes Poly(carbonat-siloxan)-Copolymers.

6. Die Polycarbonatzusammensetzung nach einem der vorstehenden Ansprüche, wobei das organophosphorhaltige Flammschutzmittel ein monomeres oder oligomeres Phosphat (P(=O)(OR)₃), Phosphit (P(OR)₃), Phosphonat (RP(=O)(OR)₂), Phosphinat (R₂P(=O)(OR)), Phosphinoxid (R₃P(=O)) oder Phosphin (R₃P) umfasst, wobei jedes R gleich oder unterschiedlich sein kann, vorausgesetzt, dass mindestens ein R eine aromatische Gruppe ist;
ein monomerer oder oligomerer Stoff mit mindestens einer Phosphor-StickstoffBindung;
oder eine Kombination davon.

7. Die Polycarbonatzusammensetzung nach einem der vorstehenden Ansprüche, wobei das organophosphorhaltige Flammschutzmittel 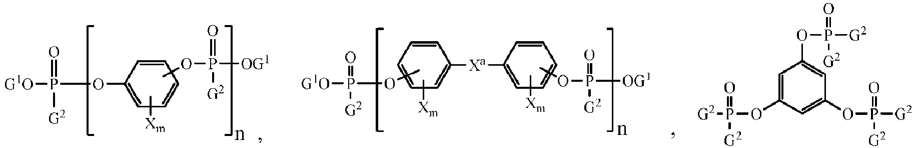
umfasst oder eine Kombination davon, wobei jedes Vorkommen von G¹ unabhängig ein _{C1-30}-Hydrocarbyl ist; jedes Vorkommen von G² unabhängig ein C₁₋₃₀-Hydrocarbyl oder Hydrocarbyloxy ist; X^{a} eine Einfachbindung, eine -O-, -S-, - S(O)-, -S(O)₂-, -C(O)- oder eine organische C₁₋₆₀-Gruppe ist; jedes X unabhängig Brom oder Chlor ist; m 0 bis 4 ist und n 1 bis 30 ist; 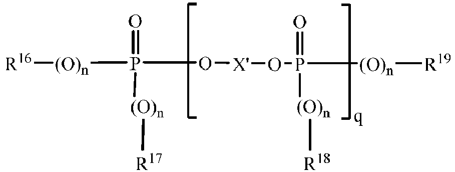
wobei R¹⁶, Rn¹⁷, R¹⁸ und R¹⁹ jeweils unabhängig voneinander C₁₋₈-Alkyl, C₅₋₆-Cycloalkyl, C₆₋₂₀-Aryl oder C₇₋₁₂-Arylalkylen sind, jeweils optional substituiert durch C₁₋₁₂-Alkyl, vorzugsweise durch C₁₋₄-Alkyl, und X' ein mono- oder polynuklearer aromatischer C₆₋₃₀-Rest oder ein linearer oder verzweigter C₂₋₃₀-aliphatischer Rest ist, die jeweils optional OH-substituiert sind und optional bis zu 8 Etherbindungen umfassen, mit der Maßgabe, dass mindestens einer der Reste R¹⁶, Rn¹⁷, R¹⁸, R¹⁹ und X' eine aromatische Gruppe ist;
oder eine Kombination davon.

8. Die Polycarbonatzusammensetzung nach einem der vorstehenden Ansprüche, wobei das organophosphorhaltige Flammschutzmittel ein Phosphazen, Phosphonitrilchlorid, Phosphorsäureesteramid, Phosphorsäureamid, Phosphonsäureamid, Phosphinsäureamid oder Tris(aziridinyl)phosphinoxid umfasst;
oder ein Phosphazen oder cyclisches Phosphazen der Formeln 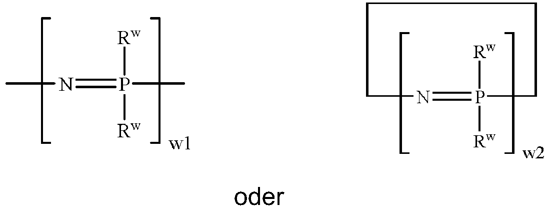
umfasst, wobei w1 3 bis 10.000 beträgt; w2 3 bis 25 oder 3 bis 7 beträgt; und jedes R^{w} unabhängig voneinander eine C₁₋₁₂-Alkyl-, Alkenyl-, Alkoxy-, Aryl-, Aryloxy- oder Polyoxyalkylengruppe ist, wobei optional mindestens ein Wasserstoffatom durch ein N-, S-, O-, oder F-Atom oder durch eine Aminogruppe ersetzt ist.

9. Die Polycarbonatzusammensetzung nach einem der vorstehenden Ansprüche, wobei der mineralische Füllstoff ferner Glimmer, Ton, Feldspat, Quarz, Quarzit, Perlit, Tripoli, Kieselgur, Aluminiumsilikat, synthetisches Calciumsilikat, Quarzglas, pyrogene Kieselsäure, Sand, Bornitridpulver, Bor-Silikat-Pulver, Calciumsulfat, Calciumcarbonate, Talk, Wollastonit oder eine Kombination davon umfasst.

10. Die Polycarbonatzusammensetzung nach einem der vorstehenden Ansprüche, wobei die Additivzusammensetzung ein Antioxidationsmittel, einen Wärmestabilisator, einen Lichtstabilisator, einen UV-Stabilisator, einen Weichmacher, ein Gleitmittel, ein Formtrennmittel, ein Antistatikum, ein Farbmittel, ein Additiv mit Oberflächeneffekt, einen Strahlungsstabilisator, ein Flammschutzmittel, das sich von dem organophosphorhaltigen Flammschutzmittel unterscheidet, ein Tropfhemmer oder eine Kombination davon umfasst.

11. Die Polycarbonatzusammensetzung nach einem der Ansprüche 1, 3, 4 und 6 bis 10, umfassend
ein Homopolycarbonat oder eine Kombination aus einem Homopolycarbonat und einem bromierten Polycarbonat;
ein Poly(carbonat-siloxan) mit einem Siloxangehalt von 30-70 Gew.-%, bezogen auf das Gesamtgewicht des Poly(carbonat-siloxans); und ein Poly(carbonat-siloxan)-Copolymer mit einem Siloxangehalt von 10 Gew.-% oder weniger, ein Poly(carbonat-siloxan)-Copolymer mit einem Siloxangehalt von mehr als 10 Gew.-% bis weniger als 30 Gew.-% oder eine Kombination davon;
11-25 Gew.-% einer Verstärkungszusammensetzung umfassend 10-24 Gew.-% Glasfasern und 1-10 Gew.-% Talk;
ein organophosphorhaltiges Flammschutzmittel in einer Menge, die ausreichend ist, um bis zu 1,5 Gew.-% Phosphor bereitzustellen;
optional bis zu 10 Gew.-% einer Additivzusammensetzung,
wobei sich jede Menge auf das Gesamtgewicht der Polycarbonatzusammensetzung bezieht, das sich auf 100 Gew.-% summiert.

12. Die Polycarbonatzusammensetzung nach einem der Ansprüche 2 bis 11, umfassend
ein Polycarbonat, das ein Poly(aliphatisches Ester-Carbonat), ein Poly(ester-carbonat-siloxan), ein bromiertes Polycarbonat, ein Poly(ester-carbonat), ein Poly(phthalat-carbonat) oder eine Kombination davon umfasst, und optional ein Homopolycarbonat;
ein Poly(carbonat-siloxan), wobei das Poly(carbonat-siloxan) ein Poly(carbonat-siloxan) mit einem Siloxangehalt von 30-70 Gew.-%, bezogen auf das Gesamtgewicht des Poly(carbonat-siloxans), ein Poly(carbonat-siloxan) mit einem Siloxangehalt von bis zu 10 Gew.-% und ein Poly(carbonat-siloxan) mit einem Siloxangehalt von 30-70 Gew.-%, jeweils bezogen auf das Gesamtgewicht des jeweiligen Poly(carbonat-siloxans), umfasst,
oder ein Poly(carbonat-siloxan) mit einem Siloxangehalt von mehr als 10 bis weniger als 30 Gew.-%, bezogen auf das Gesamtgewicht des Poly(carbonat-siloxans);
11-25 Gew.-% einer Verstärkungszusammensetzung, umfassend
10-24 Gew.-% Glasfasern;
1-10 Gew.-% eines mineralischen Füllstoffs, der Talk, Kaolin, Calciumcarbonat, Wollastonit oder eine Kombination davon umfasst;
ein organophosphorhaltiges Flammschutzmittel in einer Menge, die ausreichend ist, um bis zu 1,5 Gew.-% Phosphor bereitzustellen;
optional bis zu 10 Gew.-% einer Additivzusammensetzung,
wobei sich jede Menge auf das Gesamtgewicht der Polycarbonatzusammensetzung bezieht, das sich auf 100 Gew.-% summiert.

13. Ein Gegenstand, der die Polycarbonatzusammensetzung nach einem der vorstehenden Ansprüche umfasst, wobei der Gegenstand vorzugsweise eine Eisenbahnkomponente ist, vorzugsweise eine Eisenbahn-Innenausstattungskomponente.

14. Der Gegenstand nach Anspruch 13, wobei der Gegenstand eine Sitzkomponente, eine extrudierte Innenverkleidung für Züge, eine geformte Innenverkleidung für Züge, ein Tischtablett, eine Kopfstütze, eine Sichtschutzwand, eine Mittelkonsole, eine Armlehne, eine Beinstütze, ein Essenstablett, eine Endablage, eine Verkleidung, eine Fußleiste, einen Fußraum, eine Prospekthalterung, einen Monitor, eine Blende, eine vor Ort austauschbare Einheit, eine Fußstütze, eine Gepäckablage, einen Gepäckbehälter, ein Gepäckfach, einen Bodenverbundwerkstoff, einen Wandverbundwerkstoff, einen Luftkanal, eine Leiste, eine Vorrichtung zur Fahrgastinformation, einen Fensterrahmen, eine Innenverkleidung, eine vertikale Innenfläche, eine Innentür, eine Verkleidung für eine Innentür, eine Verkleidung für eine Außentür, eine horizontale Innenfläche, eine elektrische Komponente oder eine Beleuchtungskomponente umfasst.

15. Verfahren zur Herstellung des Gegenstands gemäß Anspruch 14, umfassend das Formen, Gießen oder Extrudieren der Zusammensetzung, um den Gegenstand bereitzustellen.

## Revendications

1. Composition de polycarbonate comprenant
un homopolycarbonate, ou une combinaison d'un homopolycarbonate et d'un polycarbonate bromé ;
un poly(carbonate-siloxane) comprenant une teneur en siloxane de 30 à 70 % en poids, présent en une quantité efficace pour fournir 1 à 10 % en poids de siloxaneau total, par rapport au poids total de la composition ;
11 à 25 % en poids d'une composition de renforcement comprenant
10 à 24 % en poids de fibres de verre, et
1 à 10 % en poids de charge minérale comprenant du talc, du kaolin, du carbonate de calcium, de la wollastonite, ou une de leurs combinaisons ;
éventuellement un ignifugeant organophosphoré en une quantité efficace pour fournir jusqu'à 1,5 % en poids de phosphore ;
éventuellement jusqu'à 10 % en poids de composition d'additifs,
dans laquelle chaque quantité est basée sur le poids total de la composition de polycarbonate, qui représente 100 % en poids.

2. Composition de polycarbonate comprenant
un polycarbonate comprenant un poly(ester-carbonate aliphatique), un poly(ester-carbonate-siloxane), un polycarbonate bromé, un poly(ester-carbonate), un poly(phtalate-carbonate), ou une de leurs combinaisons, et éventuellement un homopolycarbonate ;
un poly(carbonate-siloxane) présent en une quantité efficace pour fournir 1 à 10 % en poids de siloxane au total, par rapport au poids total de la composition ;
11 à 25 % en poids d'une composition de renforcement comprenant
10 à 24 % en poids de fibres de verre, et
1 à 10 % en poids de charge minérale comprenant du talc, du kaolin, du carbonate de calcium, de la wollastonite, ou une de leurs combinaisons ;
éventuellement un ignifugeant organophosphoré en une quantité efficace pour fournir jusqu'à 1,5 % en poids de phosphore ;
éventuellement jusqu'à 10 % en poids de composition d'additifs,
dans laquelle chaque quantité est basée sur le poids total de la composition de polycarbonate, qui représente 100 % en poids.

3. Composition de polycarbonate selon la revendication 1 ou la revendication 2, dans laquelle le rapport en poids des fibres de verre à la charge minérale est de 1/1 ou plus, de préférence 2/1 ou plus.

4. Composition de polycarbonate selon l'une quelconque des revendications précédentes, dans laquelle un échantillon moulé de la composition
a une densité de fumée après 4 minutes (DS4), mesurée sur une plaque de 3 mm d'épaisseur conformément à la norme ISO 5659-2, de 300 ou moins ; et
a un dégagement de chaleur (MAHRE), mesuré sur une plaque de 3 mm d'épaisseur conformément à la norme ISO 5660-1, de 90 kW/m² ou moins ;
éventuellement un échantillon moulé de la composition a un flux de chaleur critique à l'extinction (CFE) de 20 kW/m² ou moins, mesuré conformément à la norme ISO 5658-2 sur une plaque de 3 mm d'épaisseur.

5. Composition de polycarbonate selon l'une quelconque des revendications 2 à 4, dans laquelle le poly(carbonate-siloxane) comprend
un copolymère de poly(carbonate-siloxane) comprenant une teneur en siloxane de 10 % en poids ou moins,
un copolymère de poly(carbonate-siloxane) comprenant une teneur en siloxane de plus de 10 % en poids à moins de 30 % en poids,
un copolymère de poly(carbonate-siloxane) comprenant une teneur en siloxane de 30 à 70 % en poids,
ou une de leurs combinaisons, dans chaque cas par rapport au poids total de chaque copolymère de poly(carbonate-siloxane).

6. Composition de polycarbonate selon l'une quelconque des revendications précédentes, dans laquelle l'ignifugeant organophosphoré comprend
Un phosphite (P(OR)₃), phosphonate (RP(=O)(OR)₂), phosphinate (R₂P(=O)(OR)), oxyde de phosphine (R₃P(=O)), phosphine (R₃P) ou phosphate (P(=O)(OR)₃) monomérique ou oligomérique, dans lequel chaque R peut être identique ou différent, sous réserve qu'au moins un R soit un groupe aromatique ;
un composé monomérique ou oligomérique ayant au moins une liaison phosphore-azote ;
ou une de leurs combinaisons.

7. Composition de polycarbonate selon l'une quelconque des revendications précédentes, dans laquelle l'ignifugeant organophosphoré comprend 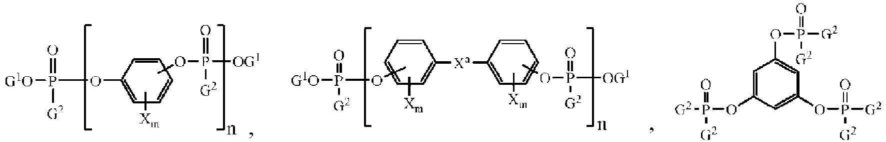
ou une de leurs combinaisons,
dans laquelle chaque occurrence de G¹ est indépendamment un hydrocarbyle en C₁₋₃₀; chaque occurrence de G² est indépendamment un hydrocarbyle ou hydrocarbyloxy en C₁₋₃₀ ; X^{a} est une liaison simple, -O-, -S-, -S(O)-, -S(O)₂-, -C(O)- ou un groupe organique en C₁₋₆₀ ; chaque X est indépendamment un brome ou un chlore ; m vaut de 0 à 4, et n vaut de 1 à 30 ; 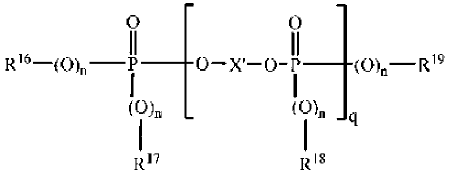
dans laquelle chacun de R¹⁶, R¹⁷, R¹⁸ et R¹⁹ est indépendamment un alkyle en C₁₋₈, un cycloalkyle en C₅₋₆, un aryle en C₆₋₂₀ ou un arylalkylène en C₇₋₁₂, chacun éventuellement substitué par un alkyle en C₁₋₁₂, de préférence par un alkyle en C₁₋₄, et X' est un fragment aromatique mono- ou poly-nucléaire en C₆₋₃₀ ou un radical aliphatique en C₂-₃₀ linéaire ou ramifié, chacun éventuellement substitué par un OH et comprenant éventuellement jusqu'à 8 liaisons éther, sous réserve qu'au moins l'un parmi R¹⁶, R¹⁷, R¹⁸, R¹⁹ et X' soit un groupe aromatique ;
ou une de leurs combinaisons.

8. Composition de polycarbonate selon l'une quelconque des revendications précédentes, dans laquelle l'ignifugeant organophosphoré comprend
un phosphazène, un chlorure phosphonitrilique, un amide d'ester phosphoreux, un amide d'acide phosphorique, un amide d'acide phosphonique, un amide d'acide phosphinique, ou un oxyde de tris(aziridinyl)phosphine ; ou
un phosphazène ou un phosphazène cyclique de formule 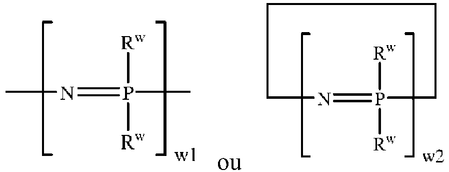
dans laquelle w1 vaut de 3 à 10 000 ; w2 vaut de 3 à 25, ou de 3 à 7 ; et chaque R^{w} est indépendamment un groupe polyoxyalkylène, aryloxy, aryle, alcoxy, alcényle ou alkyle en C₁₋₁₂, éventuellement dans laquelle au moins un atome d'hydrogène est remplacé par un atome de N, S, O ou F, ou un groupe amino.

9. Composition de polycarbonate selon l'une quelconque des revendications précédentes, dans laquelle la charge minérale comprend en outre du mica, de l'argile, du feldspath, du quartz, de la quartzite, de la perlite, du tripoli, de la terre de diatomées, du silicate d'aluminium, du silicate de calcium synthétique, de la silice fondue, de la silice fumée, du sable, de la poudre de nitrure de bore, de la poudre de silicate de bore, du sulfate de calcium, des carbonates de calcium, du talc, de la wollastonite, ou une de leurs combinaisons.

10. Composition de polycarbonate selon l'une quelconque des revendications précédentes, dans laquelle la composition d'additifs comprend un antioxydant, un stabilisateur thermique, un stabilisateur de lumière, un stabilisateur de lumière ultraviolette, un plastifiant, un lubrifiant, un agent de démoulage, un agent antistatique, un colorant, un additif à effet de surface, un stabilisateur de radiations, un ignifugeant différent de l'ignifugeant organophosphoré, un agent anti-goutte, ou une de leurs combinaisons.

11. Composition de polycarbonate selon l'une quelconque des revendications 1, 3, 4 et 6 à 10, comprenant
un homopolycarbonate ou une combinaison d'un homopolycarbonate et d'un polycarbonate bromé ;
un poly(carbonate-siloxane) ayant une teneur en siloxane de 30 à 70 % en poids, par rapport au poids total du poly(carbonate-siloxane) ; et un copolymère de poly(carbonate-siloxane) comprenant une teneur en siloxane de 10 % en poids ou moins, un copolymère de poly(carbonate-siloxane) comprenant une teneur en siloxane de plus de 10 % en poids à moins de 30 % en poids, ou une de leurs combinaisons ;
11 à 25 % en poids d'une composition de renforcement comprenant
10 à 24 % en poids de fibres de verre ;
1 à 10 % en poids de talc ;
un ignifugeant organophosphoré en une quantité efficace pour fournir jusqu'à 1,5 % en poids de phosphore ;
éventuellement jusqu'à 10 % en poids de composition d'additifs,
dans laquelle chaque quantité est basée sur le poids total de la composition de polycarbonate, qui représente 100 % en poids.

12. Composition de polycarbonate selon l'une quelconque des revendications 2 à 11, comprenant
un polycarbonate comprenant un poly(ester-carbonate aliphatique), un poly(ester-carbonate-siloxane), un polycarbonate bromé, un poly(ester-carbonate), un poly(phtalate-carbonate), ou une de leurs combinaisons, et éventuellement un homopolycarbonate ;
un poly(carbonate-siloxane), dans lequel le poly(carbonate-siloxane) comprend
un poly(carbonate-siloxane) ayant une teneur en siloxane de 30 à 70 % en poids par rapport au poids total du poly(carbonate-siloxane),
un poly(carbonate-siloxane) ayant une teneur en siloxane allant jusqu'à 10 % en poids et un poly(carbonate-siloxane) ayant une teneur en siloxane de 30 à 70 % en poids, chacun par rapport au poids total de chaque poly(carbonate-siloxane) respectif, ou
un poly(carbonate-siloxane) ayant une teneur en siloxane de plus de 10 à moins de 30 % en poids, par rapport au poids total du poly(carbonate-siloxane) ;
11 à 25 % en poids d'une composition de renforcement comprenant
10 à 24 % en poids de fibres de verre ;
1 à 10 % en poids de charge minérale comprenant du talc, du kaolin, du carbonate de calcium, de la wollastonite, ou une de leurs combinaisons ;
un ignifugeant organophosphoré en une quantité efficace pour fournir jusqu'à 1,5 % en poids de phosphore ;
éventuellement jusqu'à 10 % en poids de composition d'additifs,
dans laquelle chaque quantité est basée sur le poids total de la composition de polycarbonate, qui représente 100 % en poids.

13. Article comprenant la composition de polycarbonate selon l'une quelconque des revendications précédentes, de préférence dans lequel l'article est un composant ferroviaire, de préférence un composant ferroviaire intérieur.

14. Article selon la revendication 13, dans lequel l'article comprend un composant de siège, un revêtement intérieur extrudé de train, un revêtement intérieur moulé de train, un plateau de table, un repose-tête, un séparateur d'intimité, une console centrale, un accoudoir, un repose-jambes, un plateau repas, une travée d'extrémité, un carénage, un panneau de soubassement, un logement pour les pieds, une pochette à documents, un écran, un cadre, un élément remplaçable en ligne, une barre repose-pieds, un porte-bagages, un conteneur à bagages, un compartiment à bagages, un composite de plancher, un composite de paroi, conduit d'air, une bande, un dispositif d'information voyageurs, un cadre de fenêtre, un revêtement intérieur, une surface verticale intérieure, une porte intérieure, un habillage pour une porte intérieure, un habillage pour une porte extérieure, une surface horizontale intérieure, un composant électrique, ou un composant d'éclairage.

15. Méthode pour former l'article selon la revendication 14, comprenant le moulage, la coulée, ou l'extrusion de la composition afin de former l'article.
